# EUROPÄISCHE PATENTSCHRIFT

(11) **EP 2 697 087 B1**
(45) Veröffentlichungstag und Bekanntmachung des Hinweises auf die Patenterteilung: **02.11.2016**
(21) Anmeldenummer: 12726029.7
(22) Anmeldetag: 16.04.2012
(51) Int. Cl.: B60K 7/00

(54) **STELLANTRIEB EINER LUFTDURCHLASSVORRICHTUNG**
ACTUATOR DRIVE OF AN AIR PASSAGE DEVICE
MÉCANISME DE COMMANDE D'UN DISPOSITIF DE BOUCHE D'AIR

(30) Priorität: 15.04.2011 DE 102011007523
(43) Veröffentlichungstag der Anmeldung: 19.02.2014
(73) Patentinhaber: Brose Fahrzeugteile GmbH & Co. Kommanditgesellschaft, Coburg, Max-Brose-Straße 1 96450 Coburg (DE)
(72) Erfinder: KLIPPERT, Uwe, 36280 Oberaula (DE); TERRAZ, Gérald, 96450 Coburg (DE)
(74) Vertreter: Maikowski & Ninnemann Patentanwälte Partnerschaft mbB
(86) Internationale Anmeldenummer: PCT/EP2012/056926
(87) Internationale Veröffentlichungsnummer: WO 2012/140263

(56) Entgegenhaltungen:
- EP-A1- 1 356 850

## Beschreibung

Die Erfindung betrifft einen Stellantrieb einer Luftdurchlassvorrichtung für eine Motorkühlung eines Fahrzeugs nach dem Oberbegriff des Anspruchs 1.

Ein derartiger Stellantrieb umfasst ein elektromotorisch anzutreibendes, um eine Drehachse drehbares Antriebsrad und ein Abtriebselement, das mit dem Antriebsrad in Wirkverbindung ist und entlang eines Stellwegs mit dem Antriebsrad bewegbar ist, um die Luftdurchlassvorrichtung zwischen einer offenen Stellung, in der die Luftdurchlassvorrichtung zum Durchlassen eines Luftstroms geöffnet ist, und einer geschlossenen Stellung, in der die Luftdurchlassvorrichtung zum Minimieren eines Luftstroms geschlossen ist, zu verstellen.

Eine derartige Luftdurchlassvorrichtung kann beispielsweise vorne am Fahrzeug angeordnet sein und einen Luftstrom in einen Motorraum des Fahrzeugs steuern. Hierzu kann die Luftdurchlassvorrichtung beispielsweise Schließelemente nach Art von Lamellen aufweisen, die verstellt werden können, um den Strömungsquerschnitt für den Luftstrom zu verändern und auf diese Weise einen Luftstrom zum Kühlen eines Motors im Motorraum einzustellen.

Derartige Luftdurchlassvorrichtungen sind in unterschiedlicher Ausgestaltung hinlänglich bekannt. Beispielhaft sei auf die DE 10 2008 013 422 A1 und die DE 100 47 952 B4 verwiesen.

Herkömmliche Stellantriebe von Durchlassvorrichtungen nutzen vielfach eine sogenannte Unterdruckdose mit einer federvorgespannten Membran. Mit einer solchen Unterdruckdose wird durch ein Elektromagnetventil eine Membran gegen eine vorspannende Feder bewegt und ein Unterdruck weitergeleitet, der eine Verstellkraft zum Verstellen der Luftdurchlassvorrichtung in Richtung ihrer geschlossenen Stellung bewirkt.

Solche Unterdruckdosen haben den Vorteil, dass sie einfach aufgebaut und kostengünstig erhältlich sind. Zudem verfügen sie über eine inhärente Sicherheitsfunktion, indem bei einem Ausfall des Energieversorgungssystems des Fahrzeugs selbsttätig ein Öffnen der Luftdurchlassvorrichtung bewirkt wird, weil die elektromagnetische Kraft auf die Membran nachlässt und die Membran aufgrund der Federwirkung die Luftdurchlassvorrichtung zurück in ihre geöffnete Stellung bewegt (so genannte "Fail-Safe"-Logik). Fällt die elektrische Versorgung des Stellantriebs aus und ist eine weitere elektromotorische Steuerung der Luftdurchlassvorrichtung nicht möglich, so wird die Luftdurchlassvorrichtung somit automatisch in ihre geöffnete Stellung bewegt, sodass eine Luftkühlung eines zu kühlenden Motors weiter gewährleistet ist.

Es besteht jedoch der Wunsch, anstelle einer solchen Unterdruckdose für einen Stellantrieb einer Luftdurchlassvorrichtung eine elektromotorische Antriebsvorrichtung, beispielsweise einen elektrischen Schrittmotor, zu verwenden. Ein Nachteil bei der Verwendung einer Unterdruckdose ist, dass sie vergleichsweise groß ausgebildet werden muss, um eine hinreichende Stellkraft zum Schließen einer Luftdurchlassvorrichtung aufbringen zu können. Hintergrund ist hierbei, dass bei einer Luftdurchlassvorrichtung gegebenenfalls Lamellen bei großer Fahrgeschwindigkeit eines Fahrzeuges gegen eine andrückende Windkraft bewegt werden müssen, sodass zum Bewegen der Lamellen große Verstellkräfte erforderlich sind. Der Einsatz einer elektromotorischen Antriebsvorrichtung hat demgegenüber den Vorteil, dass diese vergleichsweise klein dimensioniert werden kann. Die erforderliche Stellkraft wird dann dadurch erreicht, dass die elektromotorische Antriebsvorrichtung über ein Untersetzungsgetriebe mit einem Abtriebselement zum Verstellen der Luftdurchlassvorrichtung gekoppelt wird, um auf diese Weise eine Antriebsbewegung der Antriebvorrichtung in untersetzter Weise in eine Abtriebsbewegung des Abtriebselements zu übertragen.

Wird ein Untersetzungsgetriebe eingesetzt, kann dies eine Selbsthemmung oder ein hohes Rückmoment im Antriebsstrang des Stellantriebs bewirken. Dies ist an sich nicht nachteilig, hat aber zur Folge, dass bei einem Ausfall des Energieversorgungssystems ein Rückstellen der Luftdurchlassvorrichtung in ihre geöffnete Stellung zum Vergrößern des Strömungsquerschnitts nicht ohne Weiteres möglich ist, weil der selbsthemmende Stellantrieb abtriebseitig angreifende Verstellkräfte hemmt und somit ein Verstellen der Luftdurchlassvorrichtung nur über den Stellantrieb möglich ist.

Aus der DE 10 2009 035 362 A1 ist ein Stellantrieb für eine Luftdurchlassvorrichtung bekannt, der zwei getrennte Stellvorrichtungen vorsieht, nämlich einerseits eine Normalbetrieb-Stellvorrichtung und andererseits eine Notbetrieb-Stellvorrichtung. Der Betrieb der Stellvorrichtungen ist thermisch gesteuert: ist eine Temperatur eines vorbestimmten Fahrzeugbereiches unterhalb einer Schwellentemperatur, so ist nur die Normalbetrieb-Stellvorrichtung aktiv und mit einem Abtriebselement gekoppelt; ist hingegen die Temperatur oberhalb der Schwellentemperatur, so ist die Normalbetrieb-Stellvorrichtung von dem Abtriebselement entkoppelt, und die Notbetrieb-Stellvorrichtung bewegt das Abtriebselement in Richtung eines Öffnens der Luftdurchlassvorrichtung.

Aus der gattungsgemässen EP 1 356 850 A1 ist eine Vorrichtung zur temperaturabhängigen Auslösung einer Notfunktion angegeben, die zum Zwecke der Integration in eine elektromotorische Stelleinheit ein vorgespanntes Betätigungselement und ein Schmelzglied aufweist. Das Schmelzglied erhält unterhalb seiner Schmelztemperatur die Vorspannung des Betätigungselements aufrecht und verliert bei Aufschmelzen seine Wirkung.

Aufgabe der vorliegenden Erfindung ist es, einen elektromotorisch anzutreibenden Stellantrieb einer Luftdurchlassvorrichtung zur Verfügung zu stellen, die bei Ausfall eines Energieversorgungssystems eines Fahrzeugs ein Rückstellen der Luftdurchlassvorrichtung aus einer geschlossenen Stellung in eine offene Stellung, in der die Luftdurchlassvorrichtung zum Durchlassen eines Luftstroms geöffnet ist, ermöglicht.

Diese Aufgabe wird durch einen Gegenstand mit den Merkmalen des Anspruchs 1 gelöst. Demnach ist bei einem Stellantrieb
- ein zwischen dem Antriebsrad und dem Abtriebselement angeordnetes Übertragungselement zum Herstellen der Wirkverbindung zwischen dem Antriebsrad und dem Abtriebselement und
ein Aktuator, der derart mit dem Übertragungselement zusammenwirkt, dass das Abtriebselement in einer ersten Stellung des Aktuators zur Bewegung entlang des Stellwegs direkt mit dem Antriebsrad gekoppelt ist und in einer
zweiten Stellung des Aktuators zumindest dann, wenn sich das Abtriebselement in einem vorbestimmten Abschnitt des Stellwegs befindet, relativ zu dem Antriebsrad bewegbar ist,
vorgesehen.

Bei dem erfindungsgemäßen Stellantrieb wird die Kopplung zwischen dem Antriebsrad und dem Abtriebselement über ein Übertragungselement hergestellt, das in Abhängigkeit von der Stellung eines Aktuators eine direkte Kopplung zwischen dem Antriebsrad und dem Abtriebselement bewirkt oder eine Relativbewegung zwischen dem Antriebsrad und dem Abtriebselement zulässt. Darunter, dass das Übertragungselement eine starre Kopplung zwischen dem Antriebsrad und dem Abtriebselement herstellt, ist vorliegend zu verstehen, dass bei einer Antriebsbewegung des Antriebsrads das Abtriebselement zusammen mit dem Antriebsrad bewegt wird. Eine solche direkte Kopplung wird entlang des gesamten Stellwegs des Abtriebselements bereitgestellt, wenn der Aktuator sich in der ersten Stellung befindet. Befindet sich der Aktuator hingegen in der zweiten Stellung, so kann das Abtriebselement relativ zu dem Antriebsrad bewegt werden - unter der zusätzlichen Randbedingung, dass eine Relativbewegung nur möglich ist, wenn das Abtriebselement sich in einem vorbestimmten Abschnitt des Stellwegs befindet, wobei der vorbestimmte Abschnitt den gesamten Stellweg oder einen Teil des Stellwegs umfassen kann.

Durch Bereitstellen des Übertragungselements wird somit eine Sicherungsfunktion ("Fail-Safe"-Funktion) zur Verfügung gestellt, die unter bestimmten Bedingungen eine Bewegung des Abtriebselements unabhängig von dem Antriebsrad ermöglicht.

Der Aktuator kann beispielsweise in Abhängigkeit von einem Spannungszustand einer an dem Stellantrieb anliegenden Spannung, über die eine das Antriebsrad antreibende Antriebsvorrichtung angesteuert wird, zwischen der ersten Stellung und der zweiten Stellung verstellbar sein. Insbesondere kann sich der Aktuator in der ersten Stellung befinden, wenn über ein Energieversorgungssystem eine hinreichende Spannung zur Verfügung gestellt wird. Fällt diese Spannung jedoch ab und liegt an dem Stellantrieb keine hinreichende Spannung mehr an, so wird der Aktuator in die zweite Stellung verstellt, so dass gegebenenfalls eine Relativbewegung zwischen dem Abtriebselement und dem Antriebsrad möglich ist. Auf diese Weise kann bei einem Ausfall der Energieversorgung das Abtriebselement und zusammen mit dem Abtriebselement Lamellen der Luftdurchlassvorrichtung in Richtung ihrer offenen Stellung verstellt werden, um sicherzustellen, dass auch ohne elektrische Versorgung des Stellantriebs eine hinreichende Kühlung mittels eines die Luftdurchlassvorrichtung durchströmenden Luftstroms gewährleistet ist.

Abhängig von der Stellung des Aktuators und abhängig davon, wo auf dem Stellweg sich das Abtriebselement befindet, kann somit eine Entkopplung des Abtriebselements von dem Antriebsrad bewirkt werden. Dass eine solche Entkopplung nicht ausschließlich von der Stellung des Aktuators abhängig gemacht wird, sondern zusätzlich auch die Stellung des Abtriebselements auf seinem Stellweg mit einbezogen wird, ist begründet dadurch, dass eine Entkopplung und ein Rückstellen der Luftdurchlassvorrichtung in ihre geöffnete Stellung nicht erforderlich ist, wenn sich die Luftdurchlassvorrichtung ohnehin in der geöffneten Stellung befindet. Befindet sich das Abtriebselement somit in einem Abschnitt des Stellwegs, der einer geöffneten oder zumindest teilweise geöffneten Stellung der Luftdurchlassvorrichtung entspricht, so wird das Antriebsrad nicht von dem Abtriebselement entkoppelt, und das Abtriebselement ist nicht relativ zu dem Antriebsrad verstellbar. Nur wenn das Abtriebselement sich in einer Stellung auf seinem Verstellweg befindet, die einer geschlossenen oder zumindest weitestgehend geschlossenen Stellung der Luftdurchlassvorrichtung entspricht, und zusätzlich der Aktuator sich in seiner zweiten Stellung befindet (und dadurch einen Ausfall einer hinreichenden elektrischen Versorgung anzeigt), wird über das Übertragungselement das Abtriebselement von dem Antriebsrad entkoppelt und somit eine Relativbewegung zwischen dem Abtriebselement und dem Antriebsrad ermöglicht.

Das Abtriebselement ist vorzugsweise entlang einer Umfangsrichtung um die Drehachse verschiebbar an dem Antriebsrad gelagert. Das Übertragungselement ist hierbei vorteilhafterweise im Kraftschluss zwischen dem Antriebsrad und dem Abtriebselement angeordnet und kann beispielsweise durch zwei über ein Gelenk gelenkig miteinander verbundene Hebel gebildet sein. Der eine dieser Hebel ist hierbei über eine erste Gelenkstelle gelenkig mit dem Antriebsrad und der andere der Hebel über eine zweite Gelenkstelle gelenkig mit dem Abtriebselement verbunden. Das Übertragungselement bildet somit einen Knickhebel aus, der in Abhängigkeit von der Stellung des Aktuators eine direkte Kopplung des Antriebsrades mit dem daran gelagerten Abtriebselement zur Verfügung stellt oder eine Relativbewegung zwischen dem Abtriebselement und dem Antriebsrad dadurch ermöglicht, dass das Abtriebselement zu dem Antriebsrad verschoben werden kann.

Der Aktuator kann beispielsweise mit einem verdrehbar um die Drehachse des Antriebsrades gelagerten Stellelement zusammenwirken, das eine umfängliche zylindrische Mantelfläche und eine an der Mantelfläche angeordnete, die Mantelfläche unterbrechende Aussparung aufweist. Das Übertragungselement ist zum Bereitstellen der direkten Verbindung zwischen dem Antriebsrad und dem Abtriebselement an der Mantelfläche abgestützt, wenn sich der Aktuator in der ersten Stellung befindet. Auf diese Weise sind das Abtriebselement und das Antriebsrad direkt miteinander gekoppelt, so dass das Abtriebselement nicht relativ zu dem Antriebsrad bewegt werden kann und bei einer Bewegung des Antriebsrades in starrer Weise zusammen mit dem Antriebsrad bewegt wird. Befindet sich hingegen der Aktuator in der zweiten Stellung und befindet sich das Abtriebselement in einem vorbestimmten Abschnitt des Stellwegs (der insbesondere einer geschlossenen oder zumindest nahezu geschlossenen Stellung der Luftdurchlassvorrichtung entsprechen kann), so kann das Übertragungselement in die Aussparung eintauchen, so dass das Abtriebselement relativ zu dem Antriebsrad bewegt werden kann.

Abhängig von zwei logischen Bedingungen, nämlich der Stellung des Aktuators einerseits und der Stellung des Abtriebselements auf seinem Stellweg andererseits, wird somit eine Relativbewegung des Abtriebselements relativ zu dem Antriebsrad ermöglicht, um auf diese Weise das Abtriebselement bei Erfüllen der logischen Bedingungen von dem Antriebsrad zu entkoppeln und ein Rückstellen der Luftdurchlassvorrichtung in Richtung ihrer geöffneten Stellung zu ermöglichen.

Der Aktuator hält das Stellelement, wenn er sich in seiner ersten Stellung befindet, in einer Stützstellung, in der das Übertragungselement an der Mantelfläche abgestützt ist. In der Stützstellung ist somit das Abtriebselement über den gesamten Verstellweg mit dem Antriebselement zwangsgekoppelt, so dass das Abtriebselement zusammen mit dem Antriebselement bewegt wird, wenn das Antriebselement angetrieben wird.

Hierzu kann der Aktuator direkt auf das Stellelement einwirken, indem er direkt mit dem Stellelement gekoppelt ist und das Stellelement in die Stützstellung hinein oder aus der Stützstellung heraus bewegt. Eine Bewegung des Aktuators wird somit auf das Stellelement übertragen, und abhängig von der Bewegung des Aktuators, also beispielsweise dem Einfahren oder Ausfahren eines Schafts des zum Beispiel als Hubmagnet ausgebildeten Aktuators, wird das Stellelement verstellt.

Denkbar und möglich ist aber auch, dass der Aktuator nicht zum Bewegen des Stellelements mit diesem gekoppelt ist, sondern lediglich in der Stützstellung zum Halten des Stellelements in der Stützstellung auf das Stellelement einwirkt. Der Aktuator verriegelt somit in seiner ersten Stellung das Stellelement in der Stützstellung, und wenn der Aktuator in seine zweite Stellung überführt wird, gibt er das Stellelement frei, so dass das Stellelement aus der Stützstellung heraus gelangen kann. Hierzu kann das Stellelement in der Stützstellung beispielsweise an einem Anschlag eines Gehäuses des Stellantriebs anliegen und in der ersten Stellung des Aktuators verriegelnd in Anlage mit dem Anschlag gehalten werden.

In diesem Fall wird eine Bewegung des Stellelements nicht unmittelbar durch den Aktuator bewirkt, der lediglich verriegelnd in der Stützstellung auf das Stellelement einwirkt. Um das Stellelement in die Stützstellung und aus der Stützstellung heraus zu bewegen, kann beispielsweise eine mechanische Feder vorgesehen sein, die das Stellelement mit dem Antriebselement koppelt und ausgebildet ist, das Stellelement aus der Stützstellung in eine Freigabestellung, in der das Übertragungselement in die Aussparung eintauchen kann, zu bewegen, wenn der Aktuator aus seiner ersten Stellung in die zweite Stellung überführt wird und das Abtriebselement sich in dem vorbestimmten Abschnitt des Stellwegs befindet.

Mit anderen Worten ist zwischen dem Stellelement und dem Antriebselement eine mechanische Feder vorgesehen, die das Stellelement mechanisch gegenüber dem Antriebselement vorspannt. Befindet sich das Abtriebselement in dem vorbestimmten Abschnitt des Stellwegs, in dem eine Entkopplung des Abtriebselements vom Antriebselement möglich sein soll, so bewirkt die Vorspannung der mechanischen Feder, dass das Stellelement relativ zu dem Antriebselement aus seiner Stützstellung in die Freigabestellung bewegt wird, wenn der Aktuator das Stellelement freigibt. Das Stellelement wird dann bewegt und gelangt in die Freigabestellung, in der das Übertragungselement in die Aussparung an dem Stellelement eintauchen kann, so dass das Abtriebselement relativ zu dem Antriebselement bewegt werden kann und somit eine Entkopplung des Abtriebselement von dem Antriebselement bewirkt ist.

Die mechanische Feder kann eine Doppelfunktion erfüllen. Zum einen dient sie dazu, das Stellelement aus der Stützstellung heraus zu bewegen, wenn sich das Abtriebselement in dem vorbestimmten Abschnitt des Stellwegs befindet und der Aktuator das Stellelement entriegelnd freigibt. Zum anderen kann die mechanische Feder aber auch dazu dienen, das Stellelement aus der Freigabestellung zurück in die Stützstellung zu bewegen, wenn das Abtriebselement aus einer Ausgangsstellung außerhalb des vorbestimmten Abschnitts des Stellwegs, angetrieben durch das Antriebselement, in Richtung des vorbestimmten Abschnitts des Stellwegs bewegt wird. Die mechanische Feder kann somit auch zur Rückstellung des Stellelements in die Stützstellung dienen, wenn das Abtriebselement, angetrieben durch das Antriebselement, aus seiner Ausgangsstellung außerhalb des vorbestimmten Abschnitts des Stellwegs - also außerhalb eines Bereichs des Stellwegs, in dem eine Entkopplung des Abtriebselement vom Antriebselement sein soll - in Richtung des vorbestimmten Abschnitts bewegt wird. Hierzu kann in Abhängigkeit von der Stellung des Antriebselements relativ zu dem Stellelement eine Richtungsumkehr der zwischen dem Antriebselement und dem Stellelement wirkenden Kraft bewirkt werden, so dass eine Kraft aus der Stützstellung heraus auf das Stellelement wirkt, wenn sich das Abtriebselement in dem vorbestimmten Abschnitt des Stellwegs befindet, hingegen eine Kraft in Richtung der Stützstellung bewirkt wird, wenn das Abtriebselement aus einer Ausgangsstellung außerhalb des vorbestimmten Abschnitts in Richtung des Stellwegs bewegt wird.

Der Aktuator kann beispielsweise ausgebildet sein, die erste Stellung einzunehmen, wenn eine von einem Energieversorgungssystem des Fahrzeugs bereitgestellte elektrische Spannung über einem vorbestimmten Grenzwert liegt, oder die zweite Stellung einzunehmen, wenn die elektrische Spannung des Energieversorgungssystems unter dem vorbestimmten Grenzwert liegt. Abhängig von einem Zustand des den Stellantrieb versorgenden Energieversorgungssystems des Fahrzeugs wird somit der Aktuator verstellt und wirkt auf das Übertragungselement ein, um gegebenenfalls eine Entkopplung des Abtriebselements und des Antriebsrads bereitzustellen.

Der Aktuator umfasst ein elektrisches oder elektromagnetisches Betätigungselement.

Vorzugsweise weist der Aktuator einen Elektrohubmagneten als Betätigungselement auf. Ein solcher Elektrohubmagnet wird abhängig von der anliegenden Spannung bestromt und überführt den Aktuator, in bestromtem Zustand, in die erste Stellung. Fällt die vom Energieversorgungssystem des Fahrzeugs bereitgestellte Spannung ab, so dass die Spannung zu gering ist oder überhaupt keine Spannung mehr anliegt, wird die Bestromung des Elektrohubmagneten unterbrochen, und der Aktuator wird in seine zweite Stellung überführt, so dass unter Umständen eine Relativbewegung - abhängig von der Stellung des Abtriebselements auf seinem Stellweg - ermöglicht wird.

Der der Erfindung zugrunde liegende Gedanke soll nachfolgend anhand der in den Figuren dargestellten Ausführungsbeispiele näher erläutert werden. Es zeigen:
- Fig. 1: Eine schematische Ansicht eines Fahrzeugs mit einer vorne am Fahrzeug angeordneten Luftdurchlassvorrichtung;
- Fig. 2A-2D: Ansichten eines Stellantriebs einer Luftdurchlassvorrichtung in einem Normalbetrieb;
- Fig. 3A-3D: Ansichten des Stellantriebs mit dem Aktuator in nicht bestromtem Zustand und dem Abtriebselement in einem Abschnitt seines Stellwegs, der einer geschlossenen oder nahezu geschlossenen Luftdurchlassvorrichtung entspricht;
- Fig. 4A-4C: Ansichten des Stellantriebs, darstellend das Rückführen des Stellantriebs in einen betriebsgemäßen Zustand nach einer erfolgten Relativbewegung des Abtriebselements relativ zu einem Antriebsrad des Stellantriebs;
- Fig. 5: eine schematische Ansicht eines weiteren Ausführungsbeispiels eines Stellantriebs mit einem Antriebsrad und einem über ein Übertragungselement in Form eines Knickhebels mit dem Antriebsrad gekoppelten Abtriebselements;
- Fig. 6: ein weiteres Ausführungsbeispiel eines Stellantriebs mit einem Antriebsrad und einem Abtriebselement, das über eine Schubstange mit dem Antriebsrad gekoppelt ist;
- Fig. 7: ein weiteres Ausführungsbeispiel eines Stellantriebs mit einem Antriebsrad und einem Abtriebselement, wiederum gekoppelt über eine Schubstange;
- Fig. 8A: eine schematische Ansicht eines weiteren Ausführungsbeispiels eines Stellantriebs, bei dem ein Antriebsrad und ein Abtriebselement über ein Übertragungselement in Form einer Kugel miteinander koppelbar sind;
- Fig. 8B: eine Schnittansicht entlang der Linie I-I gemäß Fig. 8A;
- Fig. 9A, 9B: Explosionsansichten eines weiteren Ausführungsbeispiels eines Stellantriebs einer Luftdurchlassvorrichtung;
- Fig. 10A-10F: Ansichten des Stellantriebs in einem Normalbetrieb;
- Fig. 11A-11D: Ansichten des Stellantriebs mit einem Aktuator in nicht bestromtem Zustand und einem Abtriebselement in einem Abschnitt eines Verstellwegs, der einer geschlossenen oder nahezu geschlossenen Luftdurchlassvorrichtung entspricht; und
- Fig. 12A-12F: Ansichten des Stellantriebs, darstellend das Rückführen des Stellantriebs in einen betriebsgemäßen Zustand nach einer erfolgten Relativbewegung des Abtriebselements relativ zu einem Antriebsrad des Stellantriebs.

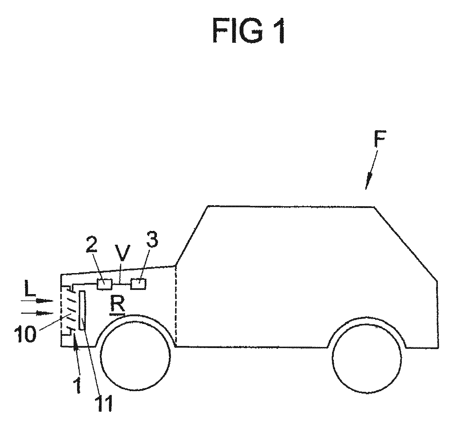

Fig. 1 zeigt in einer schematischen Ansicht ein Fahrzeug F, das eine in einem Motorraum R im vorderen Bereich des Fahrzeugs F angeordnete Luftdurchlassvorrichtung 1 aufweist.

Die Luftdurchlassvorrichtung 1, die an der vorderen Stirnseite des Fahrzeugs F im Bereich eines Kühlergrills angeordnet ist, dient zum Steuern eines Luftstroms L in den Motorraum R zum Kühlen eines in dem Motorraum R angeordneten Motors. Die Luftdurchlassvorrichtung 1 weist hierzu eine Anzahl von verstellbaren Lamellen 10 auf, die in einer geöffneten Stellung der Luftdurchlassvorrichtung 1 einen großen Strömungsquerschnitt für den Luftstrom L in den Motorraum R des Fahrzeugs F bereitstellen und zum Verkleinern des Strömungsquerschnitts verstellt werden können.

In Strömungsrichtung hinter den Lamellen 10 ist ein Lüfter 11 zum Ansaugen des Luftstroms L angeordnet.

Auf die Lamellen 10 wirkt ein Stellantrieb 2 ein, der mit einem elektrischen Energieversorgungssystem 3 des Fahrzeugs F verbunden ist. Der elektromotorische Stellantrieb 2 dient zum Verstellen der Lamellen 10 zum Verändern des Strömungsquerschnitts der Luftdurchlassvorrichtung 1 und wird elektrisch über das Energieversorgungssystem des Fahrzeugs versorgt, das hierzu eine Spannung V bereitstellt, über die eine elektromotorische Antriebsvorrichtung des Stellantriebs 2 betrieben werden kann.

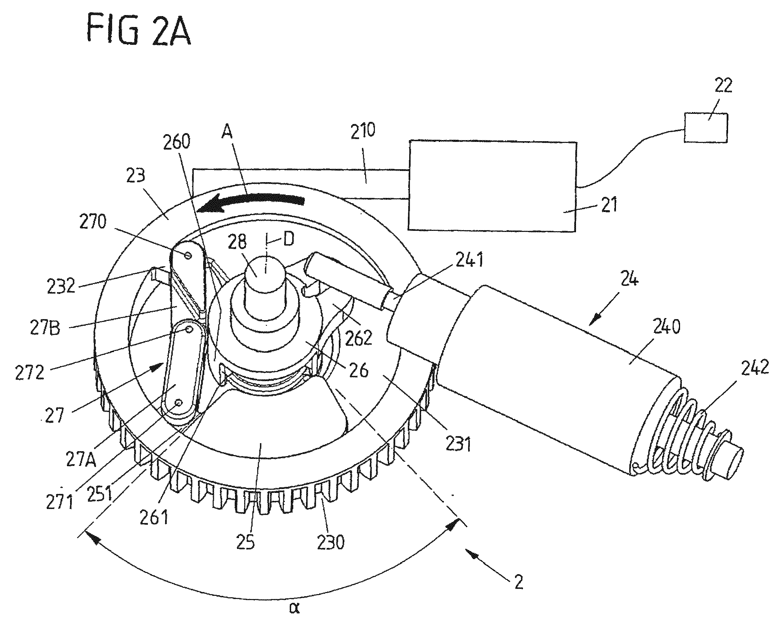

Ein Ausführungsbeispiel eines solchen Stellantriebs 2 ist in Fig. 2A-D, 3A-D und 4A-C in unterschiedlichen Ansichten und Betriebszuständen dargestellt. Zunächst soll für den grundlegenden Aufbau des Stellantriebs 2 auf Fig. 2A Bezug genommen werden, bevor anhand der übrigen Ansichten die Funktionsweise und der Bewegungsablauf des Stellantriebs 2 im Einzelnen erläutert werden soll.

Der Stellantrieb 2 weist, wie schematisch in Fig. 2A dargestellt, eine elektromotorische Antriebsvorrichtung 21 in Form eines Elektromotors auf, der über einen Stecker 22 mit dem Energieversorgungssystem 3 (siehe Fig. 1) des Fahrzeugs F verbunden ist. Die Antriebsvorrichtung 21 weist eine drehbare Antriebswelle 210 auf, die mit einem um eine Drehachse D drehbaren, über eine Welle 28 gelagerten Antriebsrad 23 kämmend in Eingriff steht. An der Antriebswelle 210 ist hierzu eine Antriebsschnecke ausgebildet, die in eine Außenverzahnung 230 des als Stirnrad ausgebildeten Antriebsrads 23 eingreift.

Der Stellantrieb 2 weist ein Abtriebselement 25 auf, das an dem Antriebsrad 23 entlang einer Umfangrichtung um die Drehachse D verschiebbar gelagert und hierzu an einer Gleitfläche 231 des Antriebsrads 23 angeordnet ist.

Das Abtriebselement 25 ist über ein Übertragungselement 27 in Form eines Knickhebels mit dem Antriebsrad 23 gekoppelt. Das Übertragungselement 27 ist gebildet durch zwei Hebel 27A, 27B, von denen der eine Hebel 27B über eine Gelenkstelle 270 mit dem Antriebsrad 23 und der andere Hebel 27A über eine Gelenkstelle 271 mit einer Befestigungsstelle 251 des Abtriebselements 25 gelenkig gekoppelt ist. Die Hebel 27A. 27B sind ihrerseits über ein Gelenk 272 gelenkig miteinander verbunden, so dass sich der Knickhebel ergibt, der eine Relativbewegung zwischen dem Antriebsrad 23 und dem Abtriebselement 25 zulässt, wenn die Hebel 27A, 27B relativ zueinander verschwenken können.

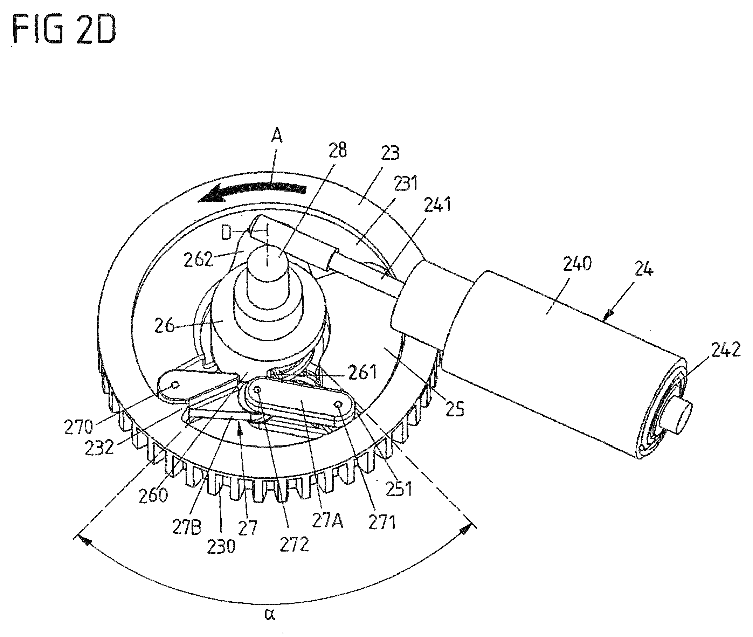

Das Abtriebselement 25 ist mit Lamellen 10 der Luftdurchlassvorrichtung 1 gekoppelt und verstellt diese zwischen einer offenen Stellung, in der ein Luftstrom L durch die Luftdurchlassvorrichtung 1 treten kann, und einer geschlossenen Stellung, in der ein Luftstrom L weitestgehend unterbunden ist (vgl. Fig. 1). Das Abtriebselement 25 kann hierzu, angetrieben durch das Antriebsrad 23, entlang eines Stellwegs α entsprechend einem Winkelbereich von ca. 90° verstellt werden, um auf diese Weise eine Stellkraft und eine Stellbewegung auf die Lamellen 10 der Luftdurchlassvorrichtung 1 zu übertragen, wobei ein Stellwinkel von 0° (vgl. Fig. 2A) einer maximal geöffneten Stellung der Luftdurchlassvorrichtung 1 und ein Stellwinkel von ca. 90° (vgl. Fig. 2D) einer maximal geschlossenen Stellung der Luftdurchlassvorrichtung 1 entspricht.

An der Welle 28 des Antriebsrads 23 ist ein Stellelement 26 angeordnet, das um die Drehachse D relativ zu dem Antriebsrad 23 und dem Abtriebselement 25 verschwenkbar ist. Das Stellelement 26 weist eine kreiszylindrische Grundform mit einer zylindrischen, umfänglichen Mantelfläche 260 auf, die umfänglich abschnittsweise durch eine Aussparung 261 unterbrochen ist. An dem Stellelement 26 greift über ein Hebelelement 261 eine Betätigungsstange 241 eines Aktuators 24 an, der zum Stellen des Stellelements 26 dient und hierzu einen Elektrohubmagneten 240 aufweist, der auf die Betätigungsstange 241 einwirkt. Die Betätigungsstange 241 ist über eine Feder 242 in Richtung einer eingefahrenen Stellung vorgespannt, entsprechend der in Fig. 2A dargestellten Stellung der Betätigungsstangen 241.

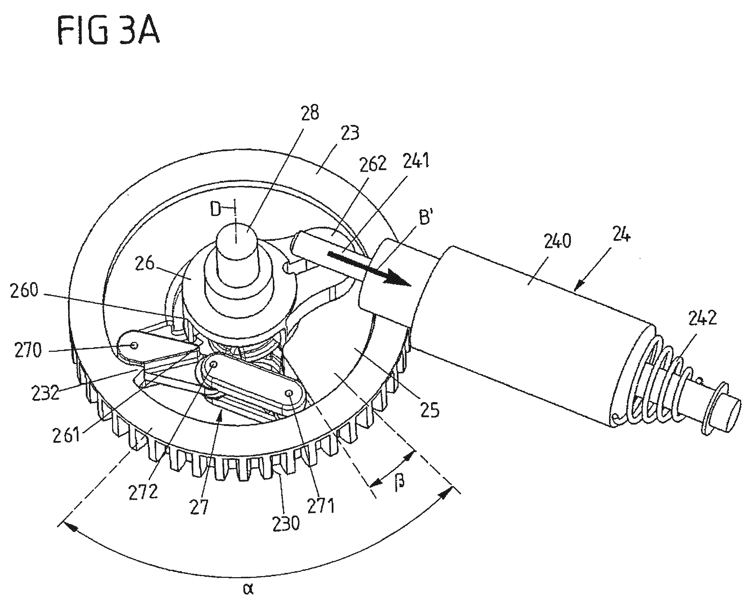

Der Aktuator 22 dient im Zusammenwirken mit dem Stellelement 26 zum Steuern des Übertragungselements 27 und damit zum Einstellen der Kupplung zwischen dem Antriebsrad 23 und dem Abtriebselement 25. Insbesondere ist das Stellelement 26 mit seiner zylindrischen Mantelfläche 260 und der daran angeordneten Aussparung 261 ausgebildet, abhängig von der Stellung des Stellelements 26 und abhängig von der Stellung des Abtriebselements 25 entlang seines Stellwegs α das Übertragungselement 27 für eine Kraftübertragung zwischen dem Antriebsrad 23 und dem Abtriebselement 25 abzustützen, wie dies in Fig. 2A dargestellt ist, oder eine Relativbewegung zwischen dem Abtriebselement 25 und dem Antriebsrad 23 zum Bereitstellen einer Sicherungsfunktion zuzulassen, wie dies nachfolgend insbesondere anhand von Fig. 3A bis 3D noch im Einzelnen erläutert werden soll.

Fig. 2A bis 2D zeigen zunächst den Stellantrieb 2 in einem Normalbetrieb, in dem, angetrieben durch die Antriebsvorrichtung 21, das Antriebsrad 23 und zusammen mit dem Antriebsrad 23 das Abtriebselement 25 zum Verstellen der Luftdurchlassvorrichtung 1 entlang einer Verdrehrichtung A entlang des Stellwegs α verstellt wird.

Wird zunächst, ausgehend von der Stellung gemäß Fig. 2A, das Antriebsrad 23 in Richtung der Verdrehrichtung A bewegt, so wird die in das Antriebsrad 23 eingeleitete Stellkraft über das Übertragungselement 27 in das Abtriebselement 25 eingeleitet und das Abtriebselement in starrer Weise zusammen mit dem Antriebsrad 23 bewegt. Hierzu wird das Gelenk 272 des Übertragungselements 27 an der zylindrischen Mantelfläche 260 des Stellelements 26 abgestützt, so dass ein Einknicken des Übertragungselements 27 in Form des Knickhebels nicht möglich ist und damit das Abtriebselement 25 über das Übertragungselement 27 direkt mit dem Antriebsrad 23 gekoppelt ist. Dadurch, dass der Hebel 27B des Übertragungselements 27 zusätzlich über einen keilförmigen, radial nach innen vorspringenden Vorsprung 232 an dem Antriebsrad 23 auch gegen ein Verknicken in eine vom Stellelement 26 weg weisende Richtung festgelegt ist, ist das Übertragungselement 27 arretiert, so dass die Hebel 27A, 27B sich nicht relativ zueinander bewegen können und die starre Verbindung des Antriebsrads 23 mit dem Abtriebselement 25 herstellen.

Der Aktuator 24 ist, wie in Fig. 2A dargestellt, bei einer Stellbewegung ausgehend von einer maximalen geöffneten Stellung der Luftdurchlassvorrichtung 1 zunächst nicht bestromt, um den hierfür ansonsten erforderlichen Energieaufwand zu sparen. Der Aktuator 24 ist dabei im Normalbetrieb solange nicht bestromt, wie das Abtriebselement 25 sich in einem Bereich des Stellwegs α befindet, in dem das Übertragungselement 27 mit seinem Gelenk 272 an der zylindrischen Mantelfläche 260 des Stellelements 26 abgestützt ist.

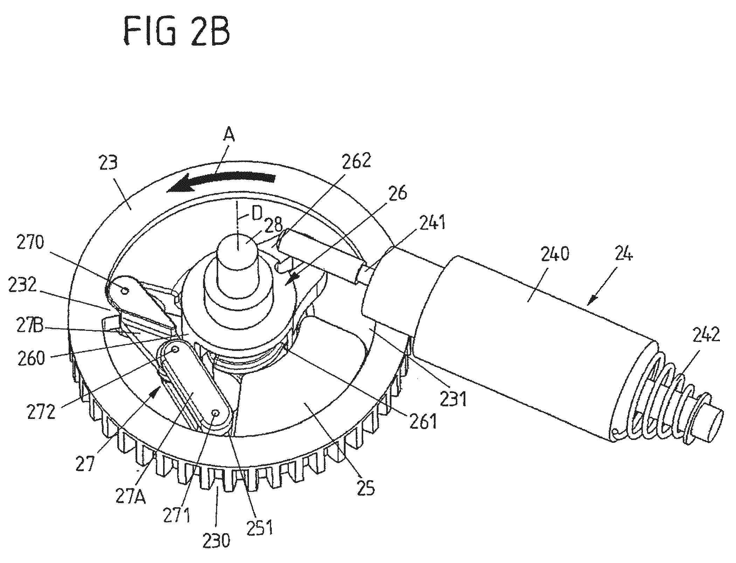

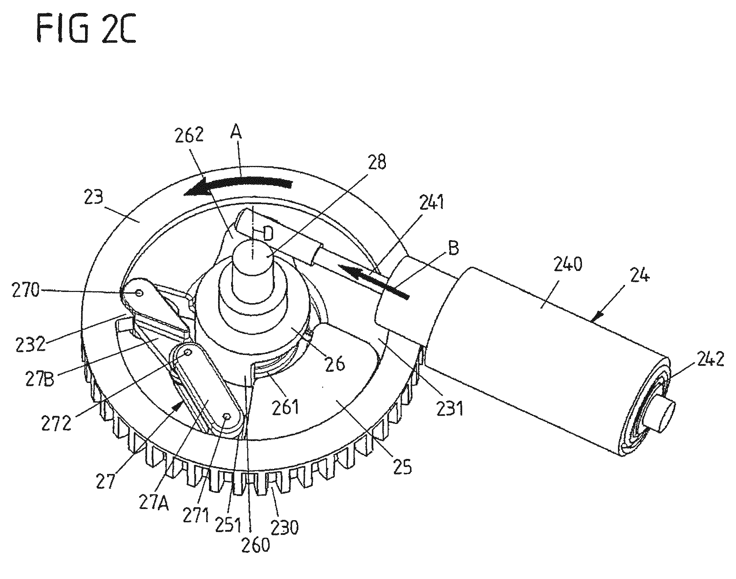

Wird das Antriebsrad 23 in die Verdrehrichtung A bewegt, so wird das Abtriebselement mitbewegt und erreicht die in Fig. 2B dargestellte Stellung, in der die Luftdurchlassvorrichtung 1 teilweise geschlossen ist. Weil sich dabei das Gelenk 272 der Aussparung 261 in der zylindrischen Mantelfläche 260 des Stellelements 26 annähert, wird der Aktuator 24 bestromt und die Betätigungsstange 241 in eine Richtung B gemäß Fig. 2C ausgefahren, so dass das Stellelement 26 in die in Fig. 2C dargestellt Stellung gelangt, in der das Gelenk 272 des Übertragungselements 27 entlang des gesamten Stellwegs α an der Mantelfläche 260 des Stellelements 26 abgestützt ist.

Aufgrund der Abstützung an dem Stellelement 26 ist das Abtriebselement 25 im Normalbetrieb somit entlang des gesamten Stellwegs α direkt mit dem Antriebsrad 23 gekoppelt und wird mit dem Antriebsrad 23 entlang der Verdrehrichtung A bewegt.

Zum elektromotorisch angetriebenen Rückstellen der Luftdurchlassvorrichtung 1 wird das Antriebsrad 23, angetrieben durch die Antriebsvorrichtung 21, entgegen der Verdrehrichtung A zurückbewegt, und das Abtriebselement 25 wird zusammen mit dem Antriebsrad 23 entsprechend zurückverstellt.

Anstatt den Aktuator 24 erst zu bestromen, wenn das Abtriebselement 25 aus einer der geöffneten Luftdurchlassvorrichtung 1 entsprechenden Position herausbewegt wird (vgl. Übergang von Fig. 2A zu Fig. 2C), kann der Aktuator 24 im Normalbetrieb auch dauerhaft bestromt sein. Dies bedingt elektrische Verluste am Aktuator 24, spart aber eine Sensorik und Steuerung zum Steuern des Aktuators 24 in Abhängigkeit von der Stellbewegung des Abtriebselements 25.

Der Aktuator 24 verstellt das Stellelement 26 grundsätzlich in Abhängigkeit von einer Spannung V, die dem Stellantrieb 2 über das Energieversorgungssystem 3 des Fahrzeugs F bereitgestellt wird. Liegt am Stellantrieb 2 eine hinreichende Spannung V an, so wird der Aktuator 24 bestromt (es sei denn, das Abtriebselement 25 befindet sich in einer Position, die der geöffneten Luftdurchlassvorrichtung 1 entspricht, vgl. Fig. 2A). Liegt am Stellantrieb 2 keine hinreichende Spannung V an, so wird der Aktuator 24 nicht bestromt, und die Betätigungsstange 241 wird in eine Richtung B' eingefahren, wie dies in Fig. 3A gezeigt ist. Auf diese Weise bewirkt der Aktuator 24 zur Bereitstellung einer Sicherungsfunktion ("Fail-Safe"-Funktion) eine Entkopplung des Abtriebselements 25 von dem Antriebsrad 23, wenn ein Ausfall einer hinreichenden elektrischen Versorgung des Stellantriebs 2 detektiert wird, beispielsweise weil die Spannung V unter einen vorbestimmten Grenzwert gefallen ist, und zudem ein Öffnen der Luftdurchlassvorrichtung 1 erforderlich ist, weil sich die Luftdurchlassvorrichtung 1 mit ihren Lamellen 10 in einer geschlossenen oder nahezu geschlossenen Stellung befindet. In diesem Fall soll eine Relativbewegung des Abtriebselements 25 relativ zu dem Antriebsrad 23 ermöglicht werden, um die Lamellen 10, beispielsweise unter Wirkung einer geeigneten Federvorspannung, selbsttätig in eine geöffnete Stellung zurückzuführen, um einen Luftstrom L zur Kühlung eines zu kühlenden Motors im Motorraum R (siehe Fig. 1) des Fahrzeugs F zu gewährleisten, auch wenn die elektrische Versorgung des Stellantriebs 2 ausgefallen ist.

Eine Entkopplung des Abtriebselements 25 von dem Antriebsrad 23 ist hierbei erforderlich, weil der Stellantrieb 2 bei geschlossenem Kraftübertragungsstrang zwischen der Antriebsvorrichtung 21 mit dem Abtriebselement 25 selbsthemmend sein kann, so dass ein Rückstellen ohne Betätigung der Antriebsvorrichtung 21 nicht oder nur sehr schwer möglich ist. Eine solche Selbsthemmung kann beispielsweise über den Eingriff der Antriebswelle 210 in das Antriebsrad 23 oder über ein zwischen der Antriebsvorrichtung 210 und dem Antriebsrad 23 angeordnetes, zusätzliches Getriebe bewirkt sein.

Fällt die durch das Energieversorgungssystem 3 bereitgestellte Spannung V ab, beispielsweise weil das Energieversorgungssystem insgesamt ausgefallen ist oder die elektrische Verbindung zwischen dem Energieversorgungssystem 3 und dem Stellantrieb 2 beeinträchtigt ist, so wird der Elektrohubmagnet 240 des Aktuators 24 nicht (mehr) bestromt und die Betätigungsstange 241 - aufgrund der vorspannenden Feder 242 - in die in Fig. 3A dargestellte, eingefahrene Stellung verstellt. Zusammen mit der Betätigungsstange 241 wird auch das über das Hebelelement 262 mit der Betätigungsstange 241 gekoppelte Stellelement 26 verschwenkt und gelangt in die in Fig. 3A dargestellte Stellung.

Befindet sich das Abtriebselement 25, wie in Fig. 3A dargestellt, bei Ausfall der elektrischen Versorgung und somit einem damit einhergehenden Spannungsabfall in einem Abschnitt β des Stellwegs α (siehe Fig. 3A), der einer geschlossenen oder nahezu geschlossenen Stellung der Luftdurchlassvorrichtung 1 entspricht, so gelangt das Gelenk 272 des Übertragungselements 27 in den Bereich der Aussparung 261 an der zylindrischen Mantelfläche 260 des Stellelements 26, wenn das Stellelement 26 durch Einfahren der Betätigungsstange 241 verstellt wird. Das Gelenk 272 liegt somit nicht mehr an der zylindrischen Mantelfläche 260 des Stellelements 26 an und wird damit nicht mehr radial durch das Stellelement 26 abgestützt.

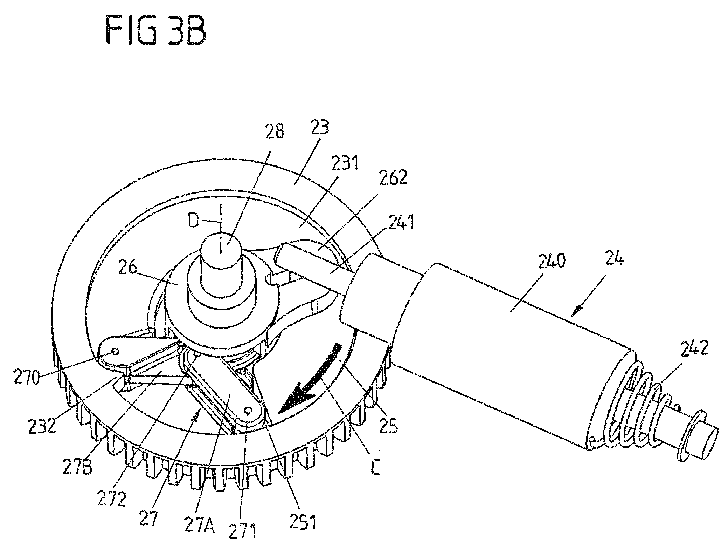

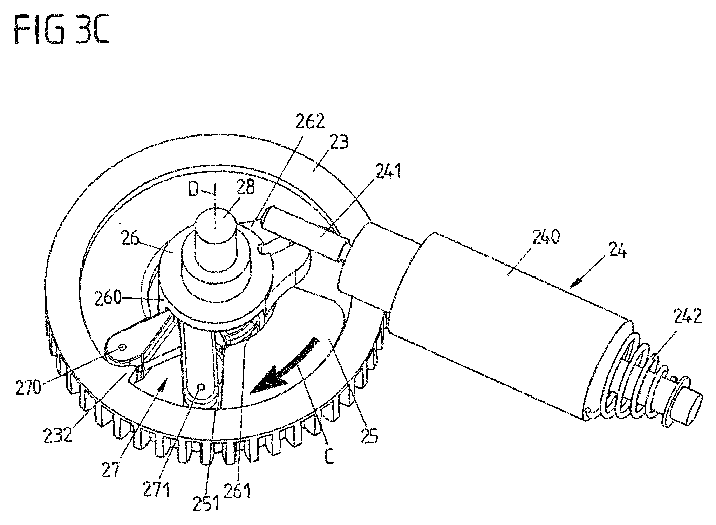

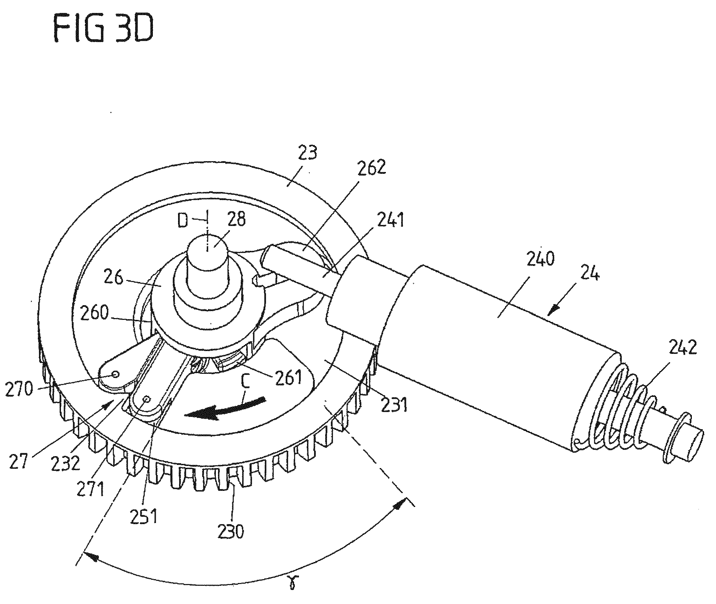

Vielmehr kann das Übertragungselement 27 mit seinem Gelenk 272, wie in Fig. 3B, 3C und 3D dargestellt, in die Aussparung 261 des Stellelements 26 eintauchen, so dass eine Bewegung in eine Richtung C des Abtriebselements 25 relativ zum Antriebsrad 23 erfolgen kann und das Abtriebselement 25 somit bei feststehendem Antriebsrad 23 bewegt werden kann. Auf diese Weise kann das Abtriebselement 25 in die Richtung C verstellt werden, um die Lamellen 10 der Luftdurchlassvorrichtung 1 in eine geöffnete Stellung der Luftdurchlassvorrichtung 1 zu überführen und somit einen Luftstrom L durch die Luftdurchlassvorrichtung 1 zu ermöglichen.

Wie aus Fig. 3D ersichtlich, ist das Abtriebselement 25 um einen maximalen Rückstellweg y gegenüber dem Antriebsrad 23 bewegbar, der kleiner als der Stellweg α im Normalbetrieb des Stellantriebs 2 ist. Durch die Relativbewegung zwischen dem Abtriebselement 25 und dem Antriebsrad 23 kann somit die Luftdurchlassvorrichtung 1 in eine zumindest weitestgehend geöffnete Stellung bei weitestgehend geöffneten Lamellen 10 überführt werden.

Eine Entkopplung des Abtriebselements 25 und des Antriebsrads 23 erfolgt somit bei Vorliegen zweier logischer Bedingungen. Zum einen muss am Aktuator 24 ein Abfallen der elektrischen Versorgungsspannung V detektiert werden, der auf einen Ausfall der elektrischen Energieversorgung hindeutet. Zum zweiten muss sich das Abtriebselement 25 in einem Abschnitt β des Stellwegs α befinden, der einer geschlossenen oder zumindest weitestgehend geschlossenen Luftdurchlassvorrichtung 1 entspricht. Nur wenn diese beiden logischen Bedingungen gleichzeitig vorliegen, gelangt das Gelenk 272 in den Bereich der Ausnehmung 261 des Stellelements 26, so dass eine Relativbewegung zwischen dem Abtriebselement 25 und dem Antriebsrad 23 zum Zwecke eines Öffnens der Luftdurchlassvorrichtung 1 möglich ist.

Die Größe des Abschnitts β kann hierbei frei gewählt werden. Beispielsweise kann vorgesehen sein, dass der Stellweg α einen Winkelbereich von 90° beschreibt und der Abschnitt β einem Winkelbereich von 45° entspricht. Mit anderen Worten wird eine Entkopplung des Abtriebselements 25 von dem Antriebsrad 23 immer dann zur Verfügung gestellt, wenn die Lamellen 10 der Luftdurchlassvorrichtung 1 mehr als 45° geschlossen sind (wobei 0° einer geöffneten Stellung und 90° einer geschlossenen Stellung der Lamellen 10 entspricht).

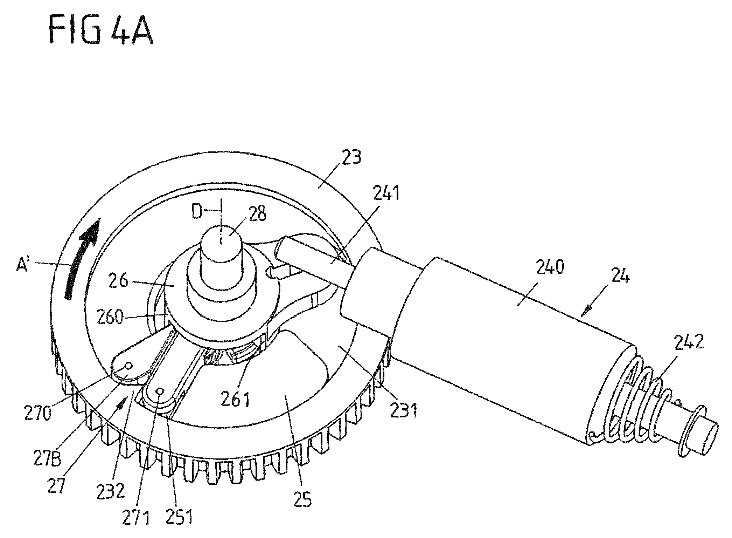

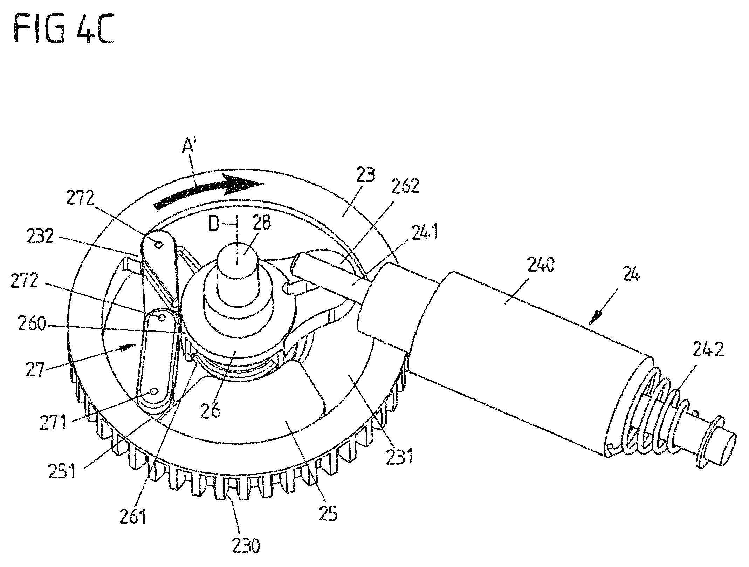

Ist das Abtriebselement 25 - nach Abfall der Spannung V bei geschlossener oder nahezu geschlossener Luftdurchlassvorrichtung 1 im Rahmen der Sicherungsfunktion - in der in Fig. 3A bis 3D dargestellten Weise relativ zu dem Antriebsrad 23 bewegt worden, so muss zum Wiederaufnehmen des Normalbetriebs der Stellantrieb 2 zurück in einen betriebsgemäßen Zustand gebracht werden. Hierzu wird, wie in Fig. 4A bis 4C dargestellt, das Antriebsrad 23 in die der Verdrehrichtung A entgegen gesetzte Verdrehrichtung A' langsam zurückbewegt, so dass das Gelenk 272 aus der Aussparung 261 des Stellelements 26 herausbewegt wird.

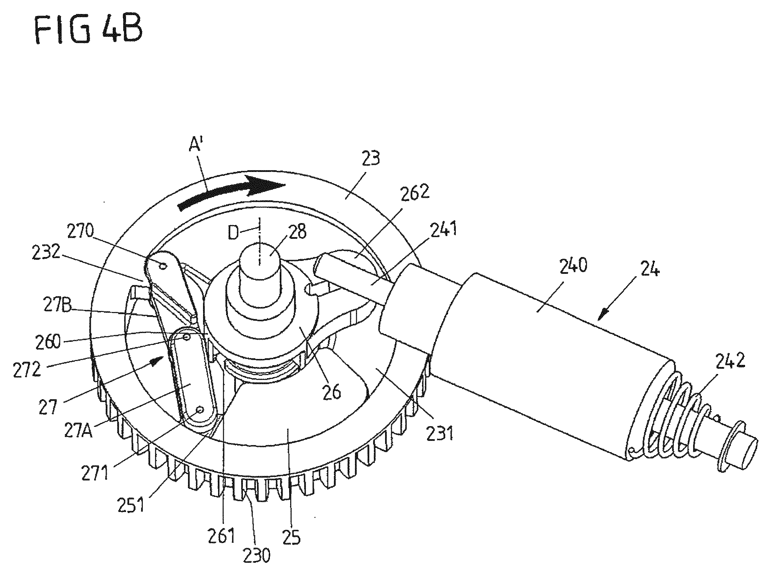

Greift das Gelenk 272, wie in Fig. 4B gezeigt, nicht mehr in die Aussparung 261 ein, so gelangt der Stellantrieb 2 zurück in den in Fig. 2A dargestellten Zustand und somit in seinen Normalbetrieb, in dem ein Verstellen des Abtriebselements 25 zusammen mit einer Drehbewegung des Antriebsrads 23 erfolgt.

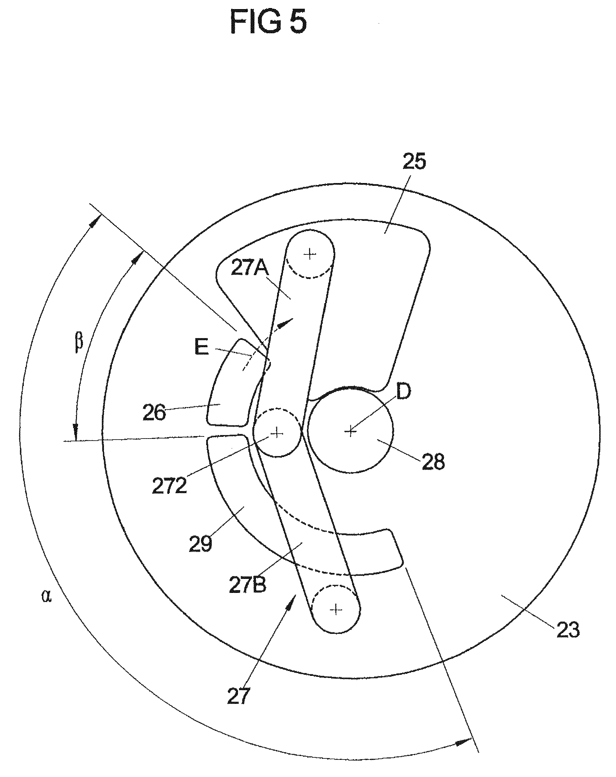

Bei einem weiteren Ausführungsbeispiel, schematisch dargestellt in Fig. 5, ist ein Abtriebsrad 23 über ein Übertragungselement 27 in Form eines Knickhebels mit einem Abtriebselement 25 koppelbar. Bauteile gleicher Funktion sind dabei, wie auch nachfolgend, mit gleichen Bezugszeichen wie vorangehend bezeichnet, soweit dies zweckdienlich ist.

Bei dem Ausführungsbeispiel gemäß Fig. 5 ist - im Unterschied zu dem vorangehend anhand von Fig. 2 bis Fig. 4 geschilderten Ausführungsbeispiel - das durch zwei über ein Gelenk 272 miteinander gekoppelte Hebel 27A, 27B gebildete Übertragungselement 27 so ausgestaltet, dass es in Abhängigkeit von der Stellung eines Stellelements 26 nach außen ausweichen kann oder nicht.

Die Funktionsweise des schematisch dargestellten Stellantriebs ist dabei derart, dass in der in Fig. 5 dargestellten Stellung des Stellelements 26 bei einer Bewegung des Antriebsrads 23 um eine Drehachse D das Antriebsrad 23 direkt mit dem Abtriebselement 25 gekoppelt ist, indem das Gelenk 272 des Übertragungselements 27 nach außen durch eine an einem Gehäuse des Stellantriebs gehäusefest angeordnete Führungsbahn 29 und das Stellelement 26 abgestützt ist. Wird das Antriebsrad über seinen Stellweg α verstellt, so gleitet das Gelenk 272 das Übertragungselement 27 innen an der Führungsbahn 29 bzw. dem Stellelement 26, so dass das Gelenk 272 nicht nach außen ausweichen kann und eine direkte Verbindung des Abtriebselements 25 mit dem Antriebsrad 23 hergestellt ist. Entsprechend wird das Abtriebselement 25 mit dem Antriebsrad bewegt und verstellt.

Das Stellelement 26 ist jedoch um die Drehachse D drehbar gelagert und kann in eine Richtung E verstellt werden. Wird das Stellelement 26 in die Richtung E verstellt, so wird in einem Abschnitt β des Verstellwegs 26 das Gelenk 272 nach außen hin nicht mehr abgestützt und ist damit freigegeben, so dass eine Relativbewegung zwischen dem Abtriebselement 25 und dem Antriebsrad 23 nach der vorangehend geschilderten Art möglich ist.

Bei dem in Fig. 5 dargestellten Ausführungsbeispiel kann das Übertragungselement 27 in Form des Knickhebels somit nach außen ausweichen, um eine Relativbewegung zwischen dem Abtriebselement 25 und dem Antriebsrad 23 zu ermöglichen. Die Funktionsweise des Stellantriebs ist ansonsten ähnlich wie vorangehend für das Ausführungsbeispiel gemäß Fig. 2 bis 4 beschrieben, so dass hierauf verwiesen werden soll.

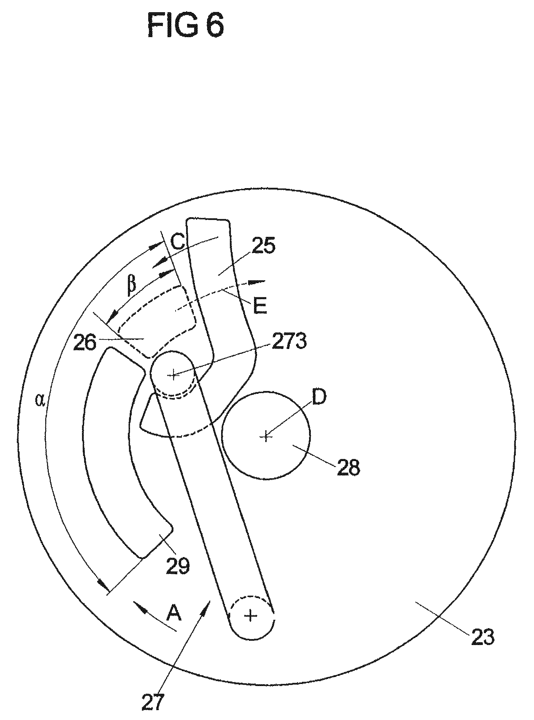

Bei dem in Fig. 6 dargestellten Ausführungsbeispiel wird als Übertragungselement 27 anstelle eines Knickhebels eine Schubstange verwendet, die ein Antriebsrad 23 mit einem Abtriebselement 25 koppelt. Das Übertragungselement 27 in Form der Schubstange ist hierbei auf dem Verstellweg des Antriebsrads 23 nach außen hin über eine gehäusefeste Führungsbahn 29 und - in der in Fig. 6 dargestellten Stellung eines Stellelements 26 - das Stellelement 26 abgestützt, so dass das Übertragungselement 27 in Form der Schubstange nicht nach außen ausweichen kann und eine direkte, starre Verbindung des Antriebsrads 26 mit dem Abtriebselement 25 bereitstellt (das Abtriebselement 25 und das Antriebsrad 23 befinden sich in unterschiedlichen Ebenen; das Abtriebselement 25 ist, wenn die starre Kopplung über die Schubstange aufgehoben ist, relativ zu dem Antriebsrad 23 beweglich).

Befindet sich das Stellelement 26 in der in Fig. 6 dargestellten Stellung, so wird bei einer Bewegung des Antriebsrads 23 das Abtriebselement 25 zusammen mit dem Antriebsrad 23 bewegt, indem bei einer Bewegung des Antriebsrads 23 in die Richtung A das Übertragungselement 27 in Form der Schubstange über ein endseitig an der Schubstange angeordnetes Koppelelement 273 auf das Abtriebselement 25 einwirkt und dieses vor sich herschiebt. Bewegt sich das Antriebsrad 23 entgegen der Richtung A, so zieht es das Abtriebselement 25 entsprechend mit sich. Das Abtriebselement 25 wird somit entlang des Stellwegs α zusammen mit dem Antriebsrad 23 bewegt.

Wird jedoch das Stellelement 26 in eine Richtung E um die Drehachse D bewegt und somit das Übertragungselement 27 in Form der Schubstange an seinem Koppelende 273 radial nach außen hin in dem Abschnitt β des Stellwegs α freigegeben, so kann in diesem Abschnitt β das Übertragungselement 27 nach außen ausweichen und entlang des nach Art einer gekrümmt ausgebildeten Führungsbahn geformten Abtriebselements 25 gleiten. Befindet sich das Antriebsrad 23 somit in einer Stellung, in der das Koppelende 273 des Übertragungselements 27 in dem Abschnitt β des Stellwegs α zu liegen kommt, so kann, wenn das Stellelement 26 in die Richtung E zum Freigeben des Koppelendes 273 verstellt wird, das Übertragungselement 27 mit dem Koppelende 273 nach außen hin ausweichen, so dass das Abtriebselement 25 in die Richtung C relativ zum Antriebsrad 23 beweglich ist. Bei einer Bewegung des Abtriebselements 25 in die Richtung C gleitet das Übertragungselement 27 mit seinem Koppelende 273 entlang des Abtriebselements 25, so dass eine Bewegung des Abtriebselements 25 in die Richtung C nicht verhindert ist.

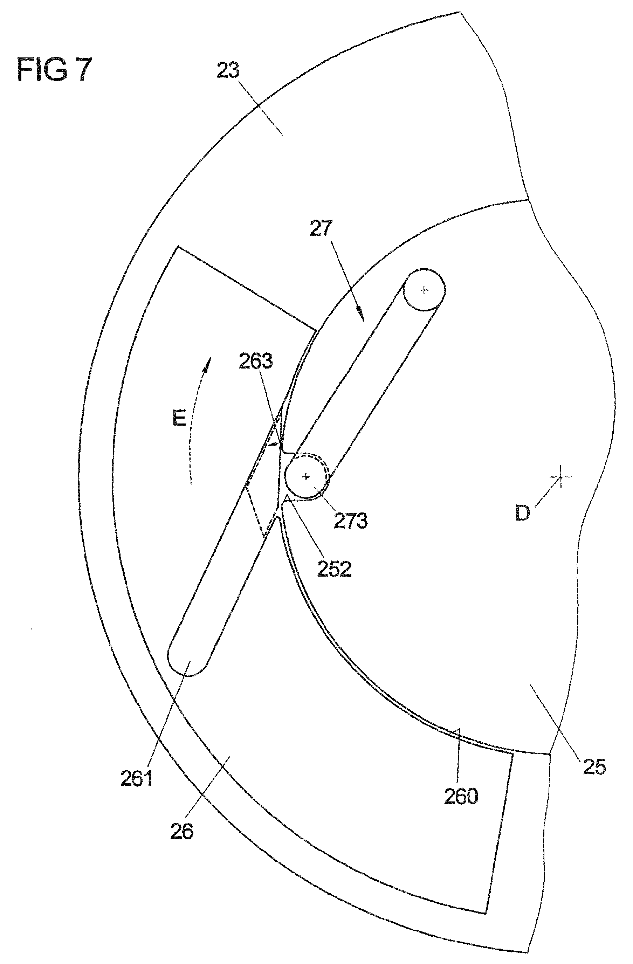

Bei einem weiteren Ausführungsbeispiel, dargestellt in Fig. 7, wird wiederum ein Übertragungselement 27 in Form einer Schubstange verwendet, das über ein Koppelende 273 in einem koppelnden Zustand in eine Aussparung 252 eines Abtriebselements 25 eingreift und an seinem dem Koppelende 273 abgewandtem Ende mit einem Antriebsrad 23 gelenkig verbunden ist, das in einer anderen axialen Ebene als das Abtriebselement 25 angeordnet ist.

Das Antriebsrad 23 und das Abtriebselement 25 sind beide um die Drehachse D drehbar gelagert. Ein Stellelement 26 ist ebenfalls um die Drehachse D drehbar angeordnet und weist eine Aussparung 261 auf, die relativ zu dem Abtriebselement 25 und insbesondere dessen Aussparung 252 entlang einer Richtung E verstellbar ist. Befindet sich die Aussparung 261 mit ihrer radial inneren Öffnung 263 im Bereich der Aussparung 252, so kann das Koppelende 273 in die Aussparung 261 eintauchen und damit die Kopplung zwischen dem Antriebsrad 23 in dem Abtriebselement 25 freigeben, so dass das Abtriebselement 25 relativ zu dem Antriebsrad 23 bewegbar ist.

Die Funktionsweise des Stellantriebs ist ansonsten identisch wie vorangehend beschrieben. Lediglich die Kopplung des Antriebsrads 23 mit dem Abtriebselement 25 ist unterschiedlich ausgeführt.

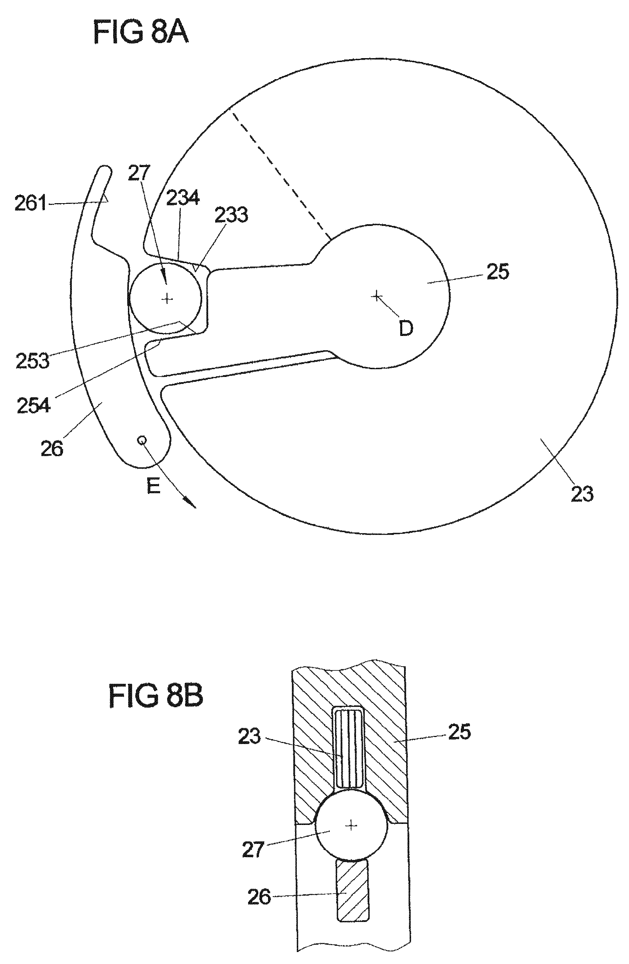

Bei einem in Fig. 8A und 8B dargestellten Ausführungsbeispiel ist ein Antriebsrad 23 über ein Übertragungselement 27 in Form einer Kugel mit einem Abtriebselement 25, abhängig von der Stellung eines Stellelements 26, gekoppelt oder nicht. Das Antriebsrad 23 und das Abtriebselement 25 sind hierbei beide um eine Drehachse D drehbar, genauso wie das Stellelement 26.

Bei der in Fig. 8A dargestellten Stellung sind das Antriebsrad 23 und das Abtriebselement 25 über das Übertragungselement 27 in Form der Kugel direkt und starr miteinander gekoppelt, so dass bei einer Bewegung des Antriebsrad 23 um die Drehachse D das Abtriebselement 25 mitbewegt wird.

Wie aus der Schnittansicht gemäß Fig. 8B ersichtlich, wird hierbei das Übertragungselement 27 in Form der Kugel nach außen durch das Stellelement 26 abgestützt, so dass die Kugel 27 nicht aus einer Aussparung 233, 253 gelangen kann, die an dem Antriebsrad 23 und dem Abtriebselement 25 gebildet ist. In diesem Fall liegt das Übertragungselement 27 in Form der Kugel zwischen Kantenabschnitten 234, 254 des Antriebsrads 23 einerseits und des Abtriebselements 25 andererseits ein, so dass eine direkte Verbindung des Abtriebselement 25 mit dem Antriebsrad 23 in Umfangsrichtung um die Drehachse D hergestellt ist.

Wird das Stellelement 26 in die Richtung E um die Drehachse D verstellt, so gelangt das Übertragungselement 27 in Form der Kugel in den Bereich einer Aussparung 261 an dem Stellelement 26, so dass die Kugel nach außen hin ausweichen kann, um die Kopplung zwischen dem Abtriebselement 25 und dem Antriebsrad 23 aufzuheben, so dass das Abtriebselement 25 relativ zu dem Antriebsrad 23 bewegt werden kann.

Wie aus der Schnittansicht gemäß Fig. 8B ersichtlich, ist das Abtriebselement 25 an dem Antriebsrad 23 gelagert, indem das Antriebsrad 23 gleitend in eine taschenartige Ausformung an dem Abtriebselement 25 eingreift.

Die schematischen Ansichten gemäß Fig. 5 bis 8 zeigen mögliche Varianten der Kopplung des Antriebsrads 23 mit dem Abtriebselement 25. Die eigentliche Funktion des Stellantriebs ist dabei identisch wie anhand von Fig. 2 bis 4 geschildert. Insbesondere ist bei sämtlichen Varianten das Stellelement 26 über einen Aktuator in Abhängigkeit von einem detektierten Fehlerzustand verstellbar.

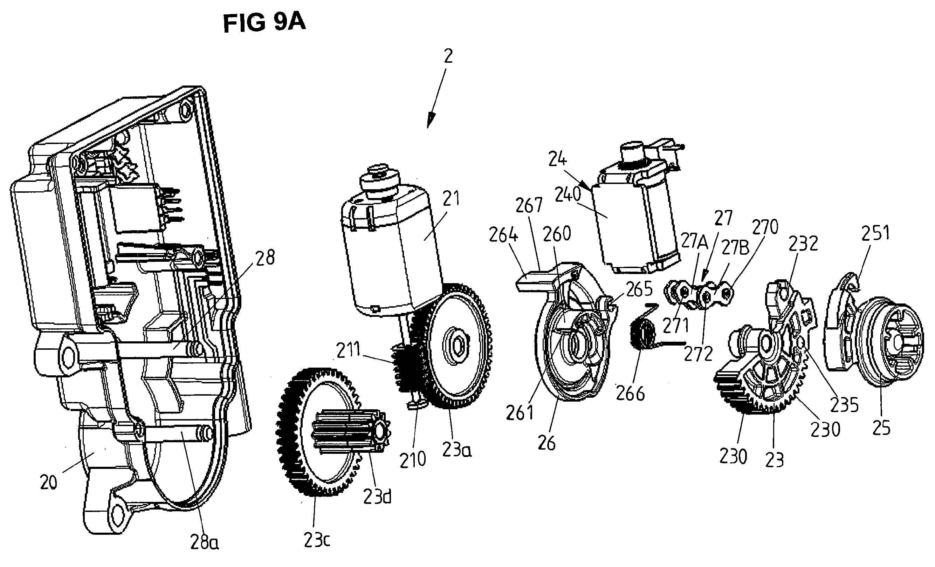

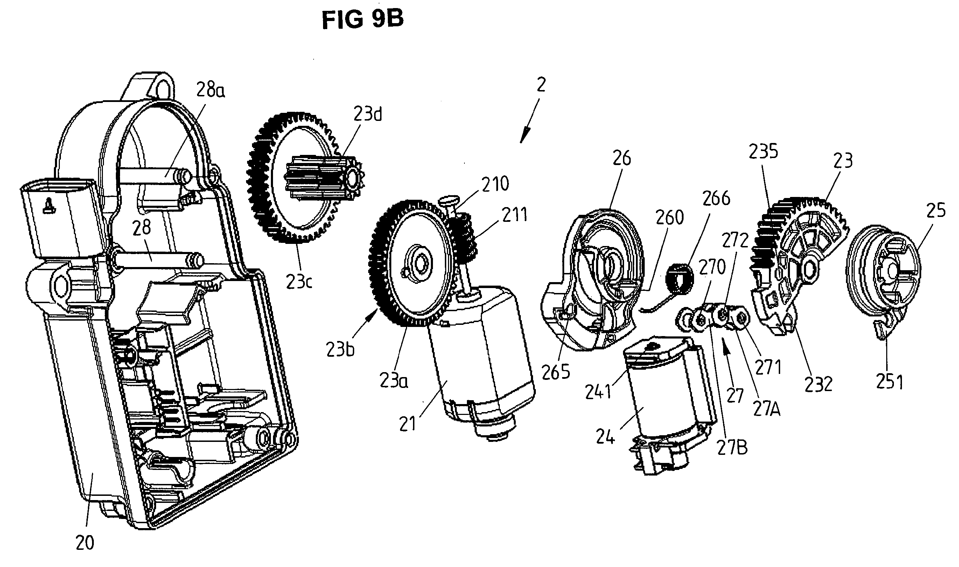

Fig. 9A, 9B bis 12A-12F zeigen Ansichten eines weiteren Ausführungsbeispiels eines Stellantriebs 2 einer Luftdurchlassvorrichtung, der zur Bereitstellung einer Fail-Safe-Funktion ausgebildet ist und in seiner Funktionsweise dem Ausführungsbeispiel gemäß Fig. 2 bis 4 ähnelt. Bauteile gleicher Funktion sollen entsprechend, soweit zweckdienlich, mit gleichen Bezugszeichen versehen sein.

Wie den Explosionsansichten gemäß Fig. 9A und 9B zu entnehmen ist, weist der Stellantrieb 2 eine Antriebsvorrichtung 21 in Form eines Elektromotors auf, die über eine Antriebswelle 210 und eine daran angeordnete Schnecke 211 mit einem Getrieberad 23a in Eingriff steht. Das Getrieberad 23a steht über ein weiteres, fest mit dem Getrieberad 23a verbundenes Getrieberad 23b (in den Ansichten gemäß Fig. 9A und 9B rückseitig des Getrieberads 23a angeordnet und daher nicht sichtbar) mit einem Getrieberad 23c in Eingriff, das wiederum mit einem Getrieberad 23d fest verbunden ist. Über das Getrieberad 23d steht das Getrieberad 23c mit einem Antriebsrad 23 über dessen Verzahnung 230 in Eingriff.

Die Getrieberäder 23a, 23b sowie das Antriebsrad 23 und ein Stellelement 26 sowie ein Abtriebselement 25 sind um eine am Gehäuse 20 angeordnete Welle 28 drehbar gelagert. Die Getrieberäder 23c, 23d hingegen sind an einer zu der Welle 28 versetzten, unterschiedlichen Welle 28a des Gehäuse 21 drehbar gelagert.

Das Antriebsrad 23 ist, analog wie bei dem Ausführungsbeispiel gemäß Fig. 2 bis 4, über ein Übertragungselement 27 in Form eines aus Hebeln 27a, 27b gebildeten Kniehebels mit dem Stellelement 26 gekoppelt, wobei das Übertragungselement 27 mit seiner Gelenkstelle 270 an einer Befestigungsstelle 232 des Antriebsrads 23 und mit seiner Gelenkstelle 271 an einer Befestigungsstelle 251 des Abtriebselements 25 angelenkt ist.

Das Stellelement 26 ist über eine Feder 266, die mit einem Ende an einer Befestigungsstelle 265 des Stellelements 26 und mit einem anderen Ende an einer Befestigungsstelle 235 des Antriebsrads 23 angreift, mit dem Antriebsrad 23 gekoppelt. Die Feder 266 ist als Schenkelfeder ausgestaltet und dient dazu, abhängig von der Stellung des Antriebsrad 23 relativ zu dem Stellelement 26 das Stellelement 26 gegenüber dem Antriebsrad 23 vorzuspannen, wie nachfolgend noch im Einzelnen erläutert werden soll.

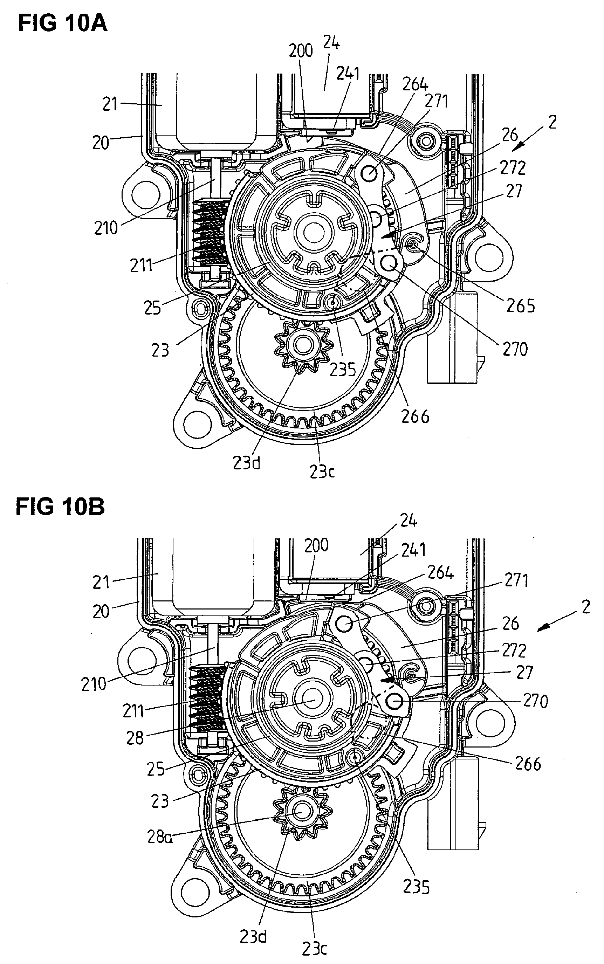

Fig. 10A bis 10F zeigen den Normalbetrieb des Stellantriebs 2. Im Betrieb treibt die Antriebsvorrichtung 21 über die Getrieberäder 23a-23d das Antriebsrad 23 an und versetzt dieses in eine Drehbewegung um die Welle 28 (in Fig. 10A entgegen dem Uhrzeigersinn). Das Antriebsrad 23 überträgt über das Übertragungselement 27 eine Verstellkraft auf das Abtriebselement 25, das somit ebenfalls um die Welle 28 in zwangsgekoppelter Weise mit dem Antriebsrad 23 verdreht wird (also ebenfalls entgegen dem Uhrzeigersinn). Die Zwangskopplung des Abtriebselements 25 mit dem Antriebsrad 23 wird hierbei über das Übertragungselement 27 in Form des Kniehebels hergestellt, der mit seinem die Hebel 27A, 27B verbindenden Gelenk 272 an einer abschnittsweise zylindrischen Mantelfläche 260 des Stellelements 26 (siehe Fig. 9A) anliegt und dementsprechend nicht radial nach innen ausweichen kann, so dass über das Übertragungselement 27 das Abtriebselement 25 zusammen mit dem Antriebsrad 23 bewegt wird.

Zu Beginn der Verstellbewegung wird das Stellelement 26 aus der in Fig. 10A dargestellten Ausgangsstellung in eine in Fig. 10B dargestellte Stützstellung bewegt, in der eine Stützfläche 264 des Stellelements 26 in Anlage mit einem Anschlag 200 des Gehäuses 20 ist. Die Bewegung des Stellelements 26 erfolgt hierbei angetrieben durch die Feder 266, die bei Bewegung des Antriebsrades 23 eine Verstellkraft in das Stellelement 26 einleitet und dieses aus der Fig. 10A dargestellten Stellung in die in Fig. 10B dargestellte Stützstellung bewegt.

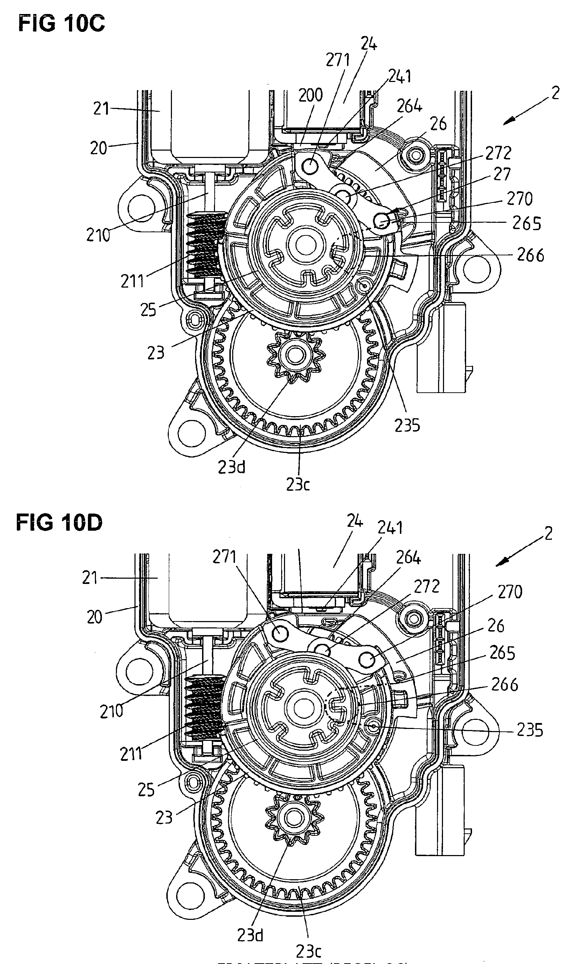

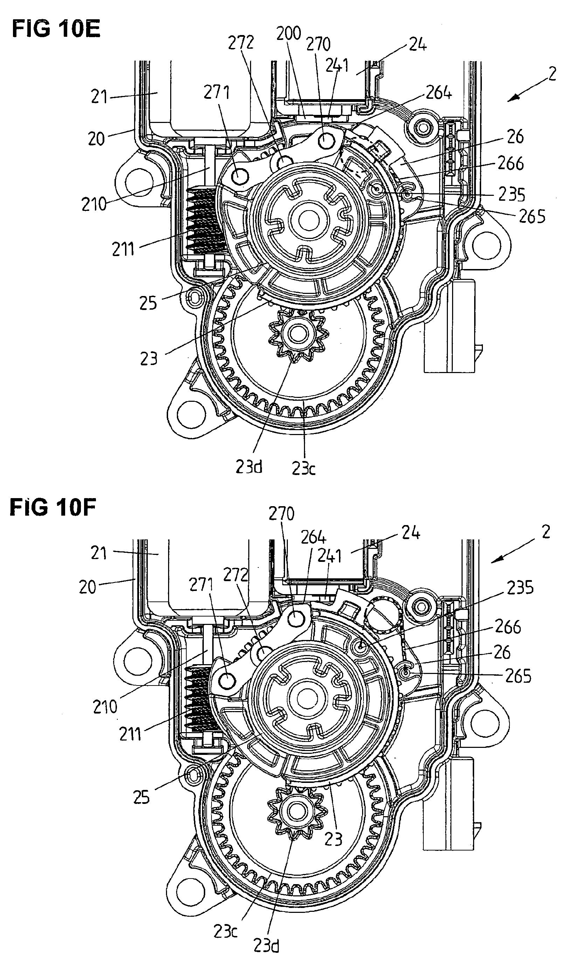

Bei weiterer Bewegung des Antriebsrads 23 wird das Abtriebselement 25 - wie in Fig. 10C, 10D und 10E dargestellt - mitbewegt, bis das Abtriebselement 25 die in Fig. 10F dargestellte Stellung erreicht, in der eine Luftdurchlassvorrichtung, deren Bestandteil der Stellantrieb 2 ist, maximal geschlossen ist.

Über das Übertragungselement 27 wird das Abtriebselement 25 in synchroner Weise mit dem Antriebsrad 23 bewegt. Das Stellelement 26 stellt über den gesamten Verstellweg des Abtriebselements 25 eine Kopplung des Antriebsrads 23 mit dem Abtriebselement 25 her.

Wie aus Fig. 10D, 10E und 10F ersichtlich, wird das Stellelement 26 bei der Bewegung des Antriebsrads 23 zum Bewegen des Abtriebselements 25 in seiner Stützstellung festgehalten, aufgrund der Anlage der Stützfläche 264 an dem Anschlag 200. Es kommt somit zu einer Relativbewegung des Antriebsrads 23 zu dem Stellelement 26. Diese Relativbewegung führt dazu, dass die Relativposition der Befestigungsstellen 235, 265 der Feder 266 an dem Antriebsrad 23 einerseits und dem Stellelement 26 andererseits sich zueinander bewegen, so dass die Feder 266 aus der in Fig. 10D dargestellten Lage in die in Fig. 10F dargestellte Lage gelangt.

In Folge der Lageänderung wird die Feder 266 verdreht, was dazu führt, dass die Richtung der zwischen dem Antriebsrad 23 und dem Stellelement 26 wirkenden Vorspannkraft umgekehrt wird. In Fig. 10D wirkt die Vorspannkraft der Feder 266 derart auf das Stellelement 26, dass dies in Richtung seiner Stützstellung und somit in Anlage mit dem Anschlag 200 gedrückt wird. Bei der Lage der Feder 266 gemäß Fig. 10E und 10F hingegen wirkt die Vorspannkraft derart auf das Stellelement 26 ein, dass es aus der Stützstellung heraus belastet wird.

Um das Stellelement bei Umkehr der Federkraftwirkung in der Stützstellung zu halten und somit im Normalbetrieb das Antriebsrad 23 mit dem Abtriebselement 25 zu koppeln, fährt ein Schaft 241 eines Aktuators 24 in Form eines Hubmagneten aus und greift in eine Aussparung 267 (siehe Fig. 9A) des Stellelements 26 ein, um auf diese Weise das Stellelement 26 in seiner Stützstellung zu verriegeln. Dies ist im Übergang von Fig. 10D hin zu Fig. 10E ersichtlich: in der Stellung gemäß Fig. 10D ist der Schaft 241 noch eingefahren; in der Stellung gemäß Fig. 10E ist der Schaft 241 ausgefahren. Die Ansteuerung des Aktuators 24 erfolgt abhängig von der Winkelstellung des Antriebsrads 23, so dass das Stellelement 26 in seiner Stützstellung durch Eingriff des Schafts 241 verriegelt ist, sobald das Antriebsrad 23 eine vorbestimmte Winkelstellung (die von dem Ort der Kraftumkehr der Feder 266 abhängt) verriegelt ist.

Soll das Abtriebselement 25 zum Öffnen der Luftdurchlassvorrichtung bewegt werden, so erfolgt die Bewegung genau umgekehrt.

Der Aktuator 24 dient dazu, mittels seines Schaftes 241 das Stellelement 26 in der Stützstellung zu verriegeln. Ist der Schaft 241 im Normalbetrieb des Stellantriebs 2 ausgefahren, wie in Fig. 10E und 10F dargestellt, so kann das Stellelement 26 nicht aus seiner Stützstellung heraus gelangen. Das Antriebsrad 23 ist somit mit dem Abtriebselement 25 gekoppelt, so dass das Abtriebselement 25 zusammen mit dem Antriebsrad 23 bewegt wird.

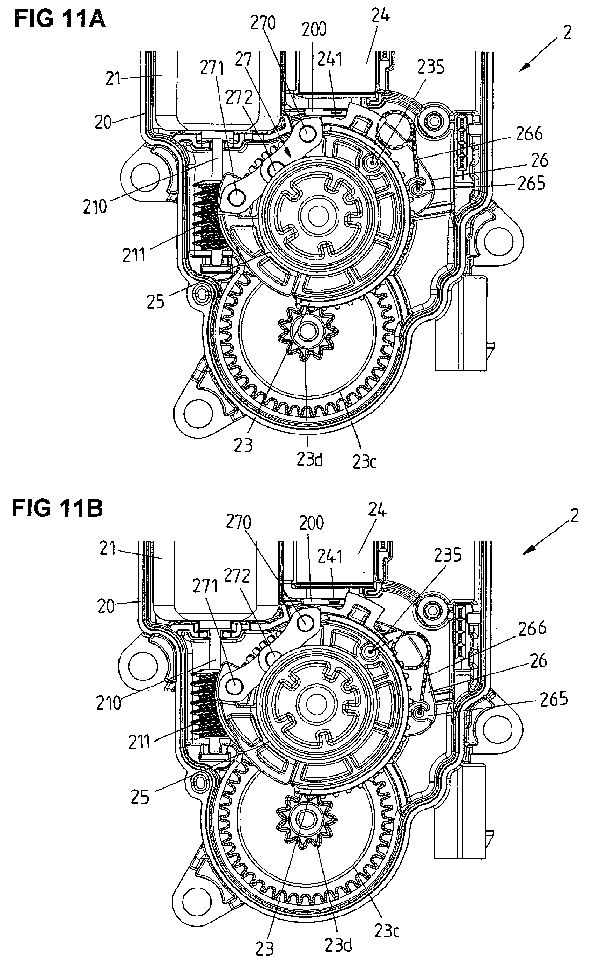

Der Aktuator 24 dient zum Bereitstellen einer Fail-Safe-Funktion, ähnlich wie vorangehend anhand des Ausführungsbeispiels gemäß Fig. 2 bis 4 bereits erläutert. Wird beispielsweise bei Ausfall des Energieversorgungssystems eines Fahrzeugs der Schaft 241 eingefahren, während das Abtriebselement 25 sich in der Stellung gemäß Fig. 10E oder 10F befindet, so ist das Stellelement 26 nicht mehr in seiner Stützstellung verriegelt und wird aufgrund der Federwirkung der Feder 266 aus seiner Stützstellung heraus gedrückt, wie dies in Fig. 11A und 11B dargestellt ist. Dies führt dazu, dass das Gelenk 272 in den Bereich einer Aussparung 261 (siehe Fig. 9A: die Aussparung 261 entspricht dem Ende der zylindrischen Mantelfläche 260) des Stellelements 26 gelangt, so dass das Übertragungselement 27 mit seinem Gelenk 272 in die Aussparung 261 eintauchen kann und daher das Abtriebselement 25 nicht länger fest mit dem Antriebsrad 23 gekoppelt ist.

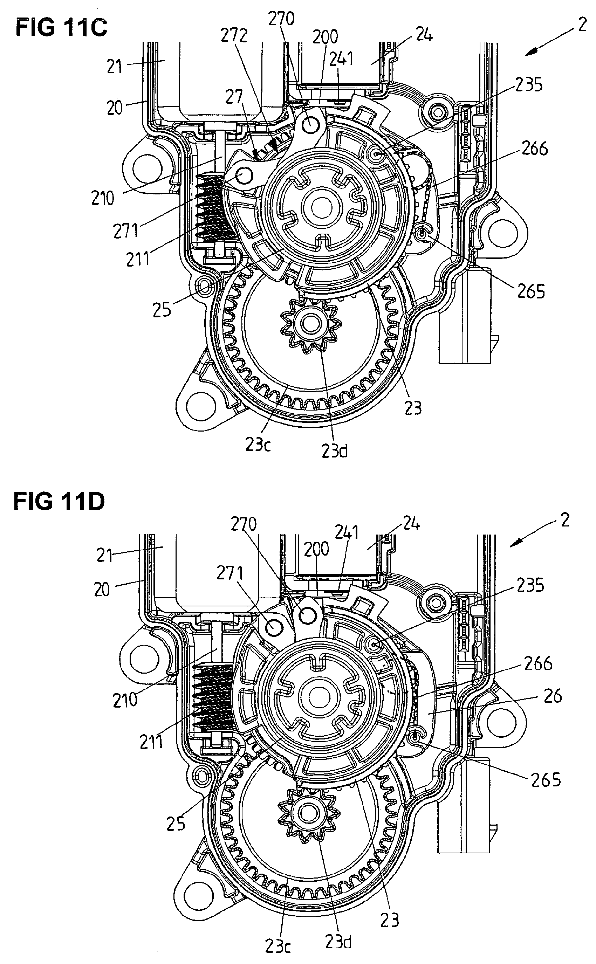

Das Abtriebselement 25 ist somit relativ zu dem Antriebsrad 23 beweglich, indem das Übertragungselement 27 mit seinem Gelenk 272 in die Aussparung 261 eintauchen kann, wie dies in Fig. 11C und 11D dargestellt ist. Durch die freie Beweglichkeit des Abtriebselements 25 kann die Luftdurchlassvorrichtung im Rahmen einer Fail-Safe-Funktion geöffnet werden, wenn beispielsweise das Energieversorgungssystem des Fahrzeugs ausfällt, so dass die Luftdurchlassvorrichtung geöffnet werden kann, um einen Luftstrom zum Kühlen eines Motorraums auch bei ausgefallener Energieversorgung bereitzustellen.

Die Entkopplung des Abtriebselements 25 von dem Antriebsrad 23 erfolgt nur, wenn sich das Abtriebselement 25 in einem vorbestimmten Abschnitt des Stellwegs befindet, der einer geschlossenen oder nahezu geschlossenen Luftdurchlassvorrichtung entspricht. Dieser Abschnitt des Verstellwegs ist bei dem Ausführungsbeispiel gemäß Fig. 9 - 12 dadurch definiert, dass in diesem Abschnitt die Feder 266 eine umgekehrte Vorspannung zwischen dem Stellelement 26 und dem Antriebsrad 23 bewirkt, entsprechend einer Vorspannung aus der Stützstellung heraus (in Fig. 11A - 11B im Uhrzeigersinn).

Befindet sich das Abtriebsrad 25 außerhalb dieses vorbestimmten Abschnitts des Verstellwegs, so wirkt die Feder 266 in Richtung der Stützstellung auf das Stellelement 26. In diesem Abschnitt des Stellwegs ist der Schaft 241 des Aktuators 24 ohnehin noch nicht ausgefahren, so dass ein Ausfall der Energieversorgung keinen Einfluss auf den Stellantrieb 2 hat und insbesondere keine Entkopplung des Abtriebselements 25 von dem Antriebsrad 23 bewirkt.

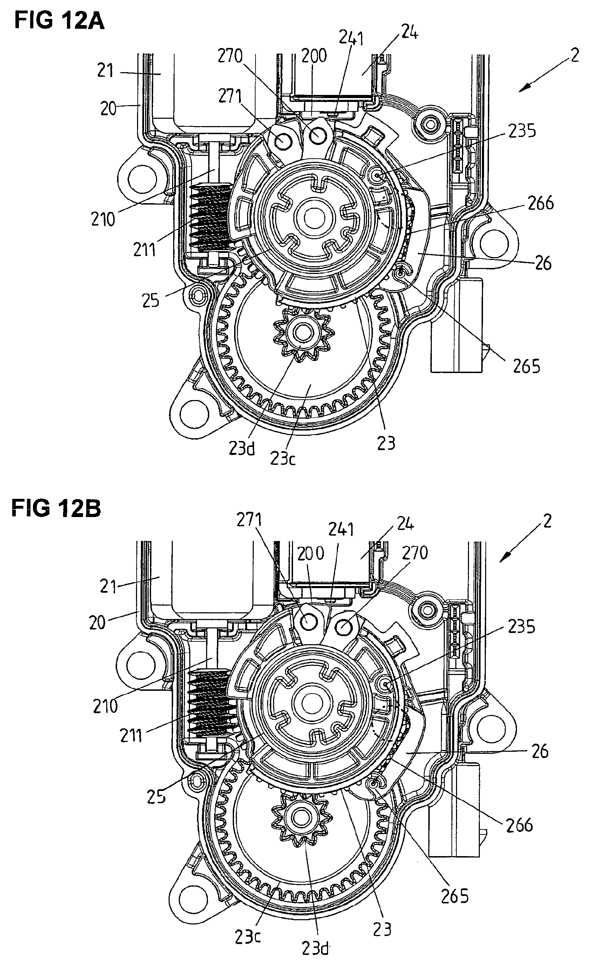

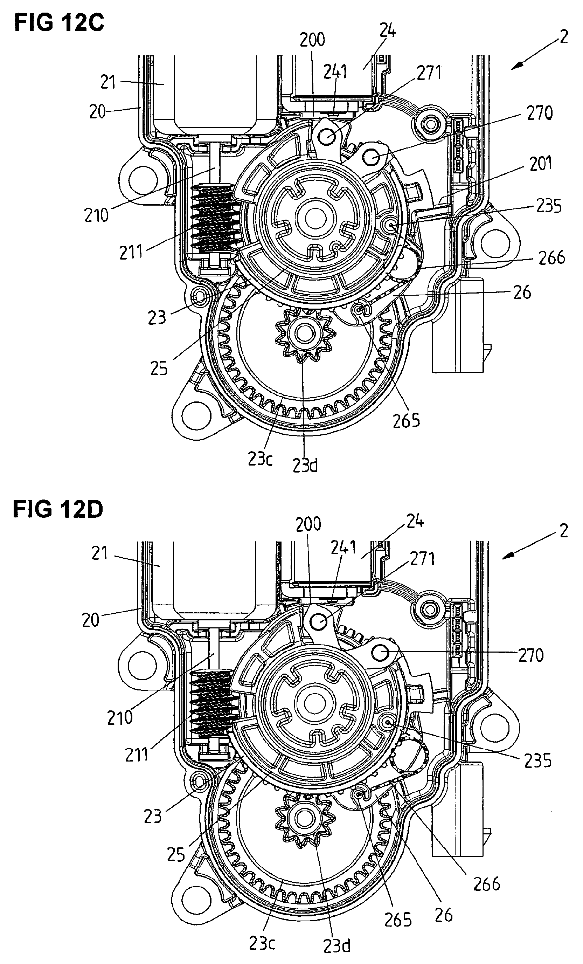

Ist der Stellantrieb 2 im Rahmen der Fail-Safe-Funktion einmal in die Stellung gemäß Fig. 11B gelangt, so müssen das Antriebsrad 23 und das Abtriebselement 25 wiederum relativ zueinander verstellt werden, um den Stellantrieb 2 zurück in einen betriebsgemäßen Zustand zu bringen. Dies kann beim Stellantrieb 2 dabei in automatischer Weise erfolgen, indem das Antriebsrad 23, wie in Fig. 12A - 12F dargestellt, in Richtung seiner Ausgangsstellung relativ zu dem Abtriebselement 25 verdreht wird. Dadurch wird das Übertragungselement 27 in Form des Kniehebels auseinander gezogen, das Gelenk 272 gelangt dadurch außer Eingriff mit der Aussparung 261 und gelangt zurück in seinen betriebsgemäßen, das Antriebsrad 23 mit dem Abtriebselement 25 koppelnden Zustand (siehe den Übergang von Fig. 12A zu 12G).

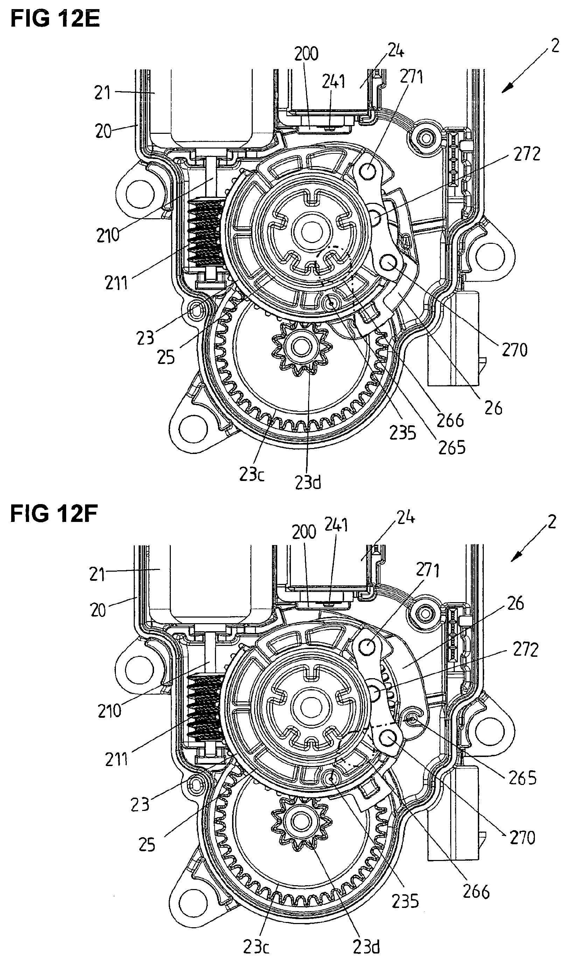

Bei dem Verfahren des Antriebsrads 23 wird zunächst, wie aus dem Übergang von Fig. 12A zu 12D ersichtlich, das Stellelement 26 zusammen mit dem Antriebsrad 23 bewegt, weil zum einen das Übertragungselement 27 mit seinem Gelenk 272 immer noch in die Aussparung 261 eingreift und zudem die Feder 266 das Stellelement 26 zusammen mit dem Antriebsrad 23 verdreht. Bei der in Fig. 12C dargestellten Winkelstellung des Stellelements 26 schlägt das Stellelement 26 mit seiner Aussparung 267 an einen gehäusefesten Anschlag 201 an, so dass das Stellelement 26 festgehalten und bei weiterer Drehbewegung des Antriebsrads 23 nicht mehr mitbewegt wird. Dementsprechend ändert sich die Lage der Feder 266, wie in Fig. 12B und 12E dargestellt, so dass es ungefähr ab der Stellung gemäß Fig. 12E zu einer Richtungsumkehr der Vorspannkraft zwischen dem Antriebsrad 23 und dem Stellelement 26 kommt und das Stellelement 26 um einen gewissen Stellweg in Richtung seiner Stützstellung zurückgestellt wird (siehe Fig. 12F). Dadurch gelangt die Aussparung 261 der Mantelfläche 260 des Stellelements 26 aus dem Bereich des Gelenks 272 des Übertragungselements 27, so dass das Übertragungselement 27 mit seinem Gelenk 272 wiederum an der Mantelfläche 260 des Stellelements 26 abgestützt ist und somit das Antriebsrad 23 wiederum fest mit dem Abtriebselement 25 gekoppelt ist.

Die Stellung gemäß Fig. 12F entspricht der Ausgangsstellung gemäß Fig. 10A, so dass der Stellantrieb 2 in seinen betriebsgemäßen Zustand zurückgeführt worden ist und wiederum seinen Normalbetrieb aufnehmen kann.

Der der Erfindung zugrunde liegende Gedanke ist nicht auf das vorangehend geschilderte Ausführungsbeispiel beschränkt, sondern lässt sich grundsätzlich auch bei anders gearteten Ausführungsformen verwirklichen. Mit der bereitgestellten Erfindung wird ein Übertragungselement zum Koppeln eines Antriebsrads mit einem Abtriebselement bereitgestellt, das in Abhängigkeit von unterschiedlichen logischen Bedingungen eine direkte Verbindung des Antriebsrads mit dem Abtriebselement bereitstellt oder, insbesondere bei einem Ausfall einer Spannungsversorgung des Stellantriebs, eine Relativbewegung zwischen dem Abtriebselement und dem Antriebsrad ermöglicht, um ein Rückstellen einer durch den Stellantrieb gesteuerten Luftdurchlassvorrichtung in eine geöffnete Stellung zu ermöglichen und auf diese Weise auch bei einem Ausfall einer Energieversorgung des Stellantriebs eine hinreichende Luftkühlung eines zu kühlenden Bauteils zu gewährleisten.

Anstatt wie bei den geschilderten Ausführungsbeispielen das Stellelement 26 drehbar um die Drehachse D anzuordnen, kann das Stellelement auch axial zur Drehachse D verschiebbar sein, um auf diese Weise das Übertragungselement 25 zum Herstellen der Wirkverbindung zwischen dem Antriebsrad 23 und dem Abtriebselement 25 - abhängig von der axialen Stellung des Stellelements 26 - freizugeben oder festzulegen.

Auch denkbar ist, anstelle eines Übertragungselements in Form eines Knickhebels ein pneumatisch betätigbares Übertragungselement beispielsweise in Form eines Luftbalgs oder dergleichen vorzusehen. In einem ersten pneumatischen Zustand, beispielsweise bei aufgeblasenem Luftbalg, stellt das Übertragungselement eine Verbindung zwischen dem Antriebsrad und dem Abtriebselement her. In einem zweiten Zustand, beispielsweise bei entleertem Luftbalg, ist eine Relativbewegung zwischen dem Antriebsrad und dem Abtriebselement möglich.

### Bezugszeichenliste

- 1: Luftdurchlassvorrichtung
- 10: Lamellen
- 2: Stellantrieb
- 20: Gehäuse
- 200, 201: Anschlag
- 21: Antriebsvorrichtung
- 210: Antriebswelle
- 211: Schnecke
- 22: Stecker
- 23: Antriebsrad
- 23a-23d: Getrieberad
- 230: Verzahnung
- 231: Gleitfläche
- 232: Vorsprung
- 233: Aussparung
- 234: Kantenabschnitt
- 235: Befestigungsstelle
- 24: Aktuator
- 240: Elektrohubmagnet
- 241: Betätigungsstange
- 242: Feder
- 25: Abtriebselement
- 251: Befestigungsstelle
- 252: Aussparung
- 253: Aussparung
- 254: Kantenabschnitt
- 26: Stellelement
- 260: Mantelfläche
- 261: Aussparung
- 262: Hebelelement
- 263: Öffnung
- 264: Stützfläche
- 265: Befestigungsstelle
- 266: Feder
- 267: Aussparung
- 27: Übertragungselement
- 27A, 27B: Hebel
- 270, 271: Gelenkstelle
- 272: Gelenk
- 273: Koppelende
- 28,28a: Welle
- 29: Gehäusefeste Führungsbahn
- 3: Energieversorgungssystem
- α: Stellweg
- β: Abschnitt
- γ: Rückstellweg
- A, A': Verdrehrichtung
- B, B': Richtung
- C: Richtung
- D: Drehachse
- E: Richtung
- F: Fahrzeug
- L: Luftstrom
- R: Motorraum
- V: Spannung

## Patentansprüche

1. Stellantrieb einer Luftdurchlassvorrichtung für eine Motorkühlung eines Fahrzeugs, mit
- einem elektromotorisch anzutreibenden, um eine Drehachse drehbaren Antriebsrad und
- einem Abtriebselement, das mit dem Antriebsrad in Wirkverbindung ist und entlang eines Stellwegs mit dem Antriebsrad bewegbar ist, um die Luftdurchlassvorrichtung zwischen einer offenen Stellung, in der die Luftdurchlassvorrichtung zum Durchlassen eines Luftstroms geöffnet ist, und einer geschlossenen Stellung, in der die Luftdurchlassvorrichtung zum Minimieren eines Luftstroms geschlossen ist, zu verstellen,
**gekennzeichnet durch**
- ein zwischen dem Antriebsrad (23) und dem Abtriebselement (25) angeordnetes Übertragungselement (27) zum Herstellen der Wirkverbindung zwischen dem Antriebsrad (23) und dem Abtriebselement (25) und
- einen Aktuator (24), der derart mit dem Übertragungselement (27) zusammenwirkt, dass das Abtriebselement (25) in einer ersten Stellung des Aktuators (24) zur Bewegung entlang des Stellwegs (α) direkt mit dem Antriebsrad (23) gekoppelt ist und in einer zweiten Stellung des Aktuators (24) zumindest dann, wenn sich das Abtriebselement (25) in einem vorbestimmten Abschnitt (β) des Stellwegs (α) befindet, relativ zu dem Antriebsrad (23) bewegbar ist, wobei der Aktuator (24) ein elektrisches oder elektromagnetisches Betätigungselement (240) umfasst.

2. Stellantrieb nach Anspruch 1, **dadurch gekennzeichnet, dass** der Aktuator (24) in Abhängigkeit von einem Spannungszustand einer an dem Stellantrieb (2) anliegenden Spannung (V) zwischen der ersten Stellung und der zweiten Stellung verstellbar ist.

3. Stellantrieb nach Anspruch 1 oder 2, **dadurch gekennzeichnet, dass** das Abtriebselement (25) entlang einer Umfangsrichtung um die Drehachse (D) verschiebbar an dem Antriebsrad (23) gelagert ist.

4. Stellantrieb nach einem der Ansprüche 1 bis 3, **dadurch gekennzeichnet, dass** das Übertragungselement (27) im Kraftfluss zwischen dem Antriebsrad (23) und dem Abtriebselement (25) angeordnet ist.

5. Stellantrieb nach einem der vorangehenden Ansprüche, **dadurch gekennzeichnet, dass** das Übertragungselement (27) durch zwei über ein Gelenk (272) gelenkig miteinander verbundene Hebel (27A, 27B) gebildet ist.

6. Stellantrieb nach Anspruch 5, **dadurch gekennzeichnet, dass** der eine Hebel (27B) über eine erste Gelenkstelle (270) gelenkig mit dem Antriebsrad (23) und der andere Hebel (27A) über eine zweite Gelenkstelle (271) gelenkig mit dem Abtriebselement (25) verbunden ist.

7. Stellantrieb nach einem der vorangehenden Ansprüche, **dadurch gekennzeichnet, dass** der Aktuator (24) mit einem verdrehbar um die Drehachse (D) des Antriebsrads gelagerten Stellelement (26) zusammenwirkt.

8. Stellantrieb nach Anspruch 7, **dadurch gekennzeichnet, dass** das Stellelement (26) eine umfängliche zylindrische Mantelfläche (260) und eine an der Mantelfläche (260) angeordnete Aussparung (261) aufweist,

9. Stellantrieb nach Anspruch 8, **dadurch gekennzeichnet, dass** das Übertragungselement (27)
- zum Bereitstellen der direkten Verbindung zwischen dem Antriebsrad (23) und dem Abtriebselement (25) an der Mantelfläche (260) abgestützt ist, wenn sich der Aktuator (24) in der ersten Stellung befindet, und
- in die Aussparung (261) eintaucht, so dass das Abtriebselement (25) relativ zu dem Antriebsrad (23) bewegbar ist, wenn sich der Aktuator (24) in der zweiten Stellung befindet und das Abtriebselement (25) sich in dem vorbestimmten Abschnitt (β) des Stellwegs (α) befindet.

10. Stellantrieb nach Anspruch 8 oder 9, **dadurch gekennzeichnet, dass** der Aktuator (24) in seiner ersten Stellung das Stellelement (26) in einer Stützstellung hält, in der das Übertragungselement (27) an der Mantelfläche (260) abgestützt ist.

11. Stellantrieb nach Anspruch 10, **dadurch gekennzeichnet, dass** das Stellelement (26) in der Stützstellung an einem Anschlag (200) eines Gehäuses (20) des Stellantriebs (2) anliegt und in der ersten Stellung des Aktuators (24) in Anlage mit dem Anschlag (200) gehalten ist.

12. Stellantrieb nach Anspruch 10 oder 11, **dadurch gekennzeichnet, dass** das Stellelement (26) über eine mechanische Feder (266) mit dem Antriebselement (23) gekoppelt ist, wobei die Feder (266) ausgebildet ist, das Stellelement (26) aus der Stützstellung in eine Freigabestellung, in der das Übertragungselement (27) in die Aussparung (261) einführbar ist, zu bewegen, wenn der Aktuator (24) aus seiner ersten Stellung in die zweite Stellung überführt wird und das Abtriebselement (25) sich in dem vorbestimmten Abschnitt (β) des Stellwegs (α) befindet.

13. Stellantrieb nach Anspruch 12, **dadurch gekennzeichnet, dass** die mechanische Feder (266) ausgebildet ist, eine Verstellkraft auf das Stellelement (26)
- aus der Stützstellung in Richtung der Freigabestellung, wenn das Abtriebselement (25) sich in dem vorbestimmten Abschnitt (β) des Stellwegs (α) befindet, und
- aus der Freigabestellung in Richtung der Stützstellung, wenn das Abtriebselement (25) aus einer Ausgangstellung außerhalb des vorbestimmten Abschnitts (β) des Stellwegs (α), angetrieben durch das Antriebselement (23), in Richtung des vorbestimmten Abschnitts (β) des Stellwegs (α) bewegt wird,
zu bewirken.

14. Stellantrieb nach einem der vorangehenden Ansprüche, **dadurch gekennzeichnet, dass** der Aktuator (24) ausgebildet ist,
- die erste Stellung einzunehmen, wenn eine von einem Energieversorgungssystem (3) des Fahrzeugs bereitgestellte elektrische Spannung (V) über einem vorbestimmten Grenzwert liegt, oder
- die zweite Stellung einzunehmen, wenn die elektrische Spannung (V) des Energieversorgungssystems (3) unter dem vorbestimmten Grenzwert liegt.

15. Stellantrieb nach einem der vorangehenden Ansprüche, **dadurch gekennzeichnet, dass** der Aktuator (24) einen Elektrohubmagneten (240) als Betätigungselement umfasst.

## Claims

1. An actuating drive of an air passage device for an engine cooling system of a vehicle, comprising
- a drive gear to be driven by an electric motor, which is rotatable about an axis of rotation, and
- an output element which is operatively connected with the drive gear and is movable with the drive gear along an adjustment path, in order to shift the air passage device between an open position, in which the air passage device is opened in order to allow an air stream to pass through, and a closed position in which the air passage device is closed in order to minimize an air stream,
**characterized by**
- a transmission element (25) arranged between the drive gear (23) and the output element (25) for establishing the operative connection between the drive gear (23) and the output element (25), and
- an actuator (24) which cooperates with the transmission element (25) such that in a first position of the actuator (24) the output element (25) is directly coupled with the drive gear (23) for movement along the adjustment path (α) and in a second position of the actuator (24), at least when the output element (25) is located in a predetermined portion (β) of the adjustment path (α), is movable relative to the drive gear (23), wherein the actuator (24) comprises an electric or electromagnetic actuating element (240).

2. The actuating drive according to claim 1, **characterized in that** the actuator (24) is shiftable between the first position and the second position in dependence on a voltage condition of a voltage (V) applied at the actuating drive (2).

3. The actuating drive according to claim 1 or 2, **characterized in that** the output element (25) is shiftably mounted on the drive gear (23) along a circumferential direction about the axis of rotation (D).

4. The actuating drive according to any of claims 1 to 3, **characterized in that** the transmission element (27) is arranged in the flux of force between the drive gear (23) and the output element (25).

5. The actuating drive according to any of the preceding claims, **characterized in that** the transmission element (27) is formed by two levers (27A, 27B) pivotally connected with each other via a joint (272).

6. The actuating drive according to claim 5, **characterized in that** the one lever (27B) is pivotally connected with the drive gear (23) via a first articulation point (270) and the other lever (27A) is pivotally connected with the output element (25) via a second articulation point (271).

7. The actuating drive according to any of the preceding claims, **characterized in that** the actuator (24) cooperates with an adjusting element (26) rotatably mounted about the axis of rotation (D) of the drive gear.

8. The actuating drive according to claim 7, **characterized in that** the adjusting element (26) includes a circumferential cylindrical shell surface (260) and a cutout (261) arranged at the shell surface (260).

9. The actuating drive according to claim 8, **characterized in that** the transmission element (27)
- is supported on the shell surface (260), in order to provide the direct connection between the drive gear (23) and the output element (25), when the actuator (24) is in the first position, and
- immerses into the cutout (261), so that the output element (25) is movable relative to the drive gear (23) when the actuator (24) is in the second position and the output element (25) is located in the predetermined portion (β) of the adjustment path (α).

10. The actuating drive according to claim 8 or 9, **characterized in that** the actuator (24) in its first position holds the adjusting element (26) in a support position in which the transmission element (27) is supported on the shell surface (260).

11. The actuating drive according to claim 10, **characterized in that** the adjusting element (26) in the support position rests against a stop (200) of a housing (20) of the actuating drive (2) and in the first position of the actuator (24) is held in contact with the stop (200).

12. The actuating drive according to claim 10 or 11, **characterized in that** the adjusting element (26) is coupled with the drive element (23) via a mechanical spring (266), wherein the spring (266) is formed to move the adjusting element (26) from the support position into a release position, in which the transmission element (27) can be introduced into the cutout (261), when the actuator (24) is transferred from its first position into the second position and the output element (25) is located in the predetermined portion (β) of the adjustment path (α).

13. The actuating drive according to claim 12, **characterized in that** the mechanical spring (266) is formed to effect an adjustment force on the adjusting element (26)
- from the support position in direction of the release position, when the output element (25) is located in the predetermined portion (β) of the adjustment path (α), and
- from the release position in direction of the support position, when the output element (25) is moved from a starting position outside the predetermined portion (β) of the adjustment path (α), driven by the drive element (23), in direction of the predetermined portion (β) of the adjustment path (α).

14. The actuating drive according to any of the preceding claims, **characterized in that** the actuator (24) is formed
- to take the first position when an electric voltage (V) provided by an energy supply system (3) of the vehicle lies above a predetermined limit value, or
- to take the second position when the electric voltage (V) of the energy supply system (3) lies below the predetermined limit value.

15. The actuating drive according to any of the preceding claims, **characterized in that** the actuator (24) comprises an electric lifting magnet (240) as actuating element.

## Revendications

1. Mécanisme de commande d'un dispositif de bouche d'air pour un refroidissement du moteur d'un véhicule, avec
- une roue d'entraînement rotative autour d'un axe de rotation, à entraînement par moteur électrique et
- un élément de sortie, qui est en liaison active avec la roue d'entraînement et est mobile le long d'un parcours de réglage avec la roue d'entraînement pour régler le dispositif de bouche d'air entre une position ouverte, dans laquelle le dispositif de bouche d'air est ouvert pour laisser passer un flux d'air, et une position fermée, dans laquelle le dispositif de bouche d'air est fermé pour minimiser un flux d'air,
**caractérisé par**
- un élément de transmission (27) agencé entre la roue d'entraînement (23) et l'élément de sortie (25) pour établir la liaison active entre la roue d'entraînement (23) et l'élément de sortie (25) et
- un actionneur (24), qui coopère avec l'élément de transmission (27) de telle sorte que l'élément de sortie (25) est couplé dans une première position de l'actionneur (24) directement avec la roue d'entraînement (23) pour le déplacement le long du parcours de réglage (α) et est mobile dans une deuxième position de l'actionneur (24), au moins lorsque l'élément de sortie (25) se trouve dans une section prédéfinie (β) du parcours de réglage (α), par rapport à la roue d'entraînement (23), dans lequel l'actionneur (24) comprend un élément d'actionnement électrique ou électromagnétique (240).

2. Mécanisme de commande selon la revendication 1, **caractérisé en ce que** l'actionneur (24) est réglable entre la première position et la deuxième position en fonction d'un état de tension d'une tension (V) appliquée au mécanisme de commande (2).

3. Mécanisme de commande selon la revendication 1 ou 2, **caractérisé en ce que** l'élément de sortie (25) est logé au niveau de la roue d'entraînement (23) de manière mobile autour de l'axe de rotation (D) le long d'une direction circonférentielle.

4. Mécanisme de commande selon l'une quelconque des revendications 1 à 3, **caractérisé en ce que** l'élément de transmission (27) est agencé dans le flux de force entre la roue d'entraînement (23) et l'élément de sortie (25).

5. Mécanisme de commande selon l'une quelconque des revendications précédentes, **caractérisé en ce que** l'élément de transmission (27) est formé par deux leviers (27A, 27B) reliés l'un à l'autre de manière articulée par le biais d'une articulation (272).

6. Mécanisme de commande selon la revendication 5, **caractérisé en ce que** l'un levier (27B) est relié à la roue d'entraînement (23) de manière articulée par le biais d'un premier point d'articulation (270) et l'autre levier (27A) est relié à l'élément de sortie (25) de manière articulée par le biais d'un deuxième point d'articulation (271).

7. Mécanisme de commande selon l'une quelconque des revendications précédentes, **caractérisé en ce que** l'actionneur (24) coopère avec un élément de réglage (26) logé de manière rotative autour de l'axe de rotation (D) de la roue d'entraînement.

8. Mécanisme de commande selon la revendication 7, **caractérisé en ce que** l'élément de réglage (26) présente une surface enveloppe cylindrique périphérique (260) et un évidement (261) agencé au niveau de la surface enveloppe (260).

9. Mécanisme de commande selon la revendication 8, **caractérisé en ce que** l'élément de transmission (27)
- est soutenu au niveau de la surface enveloppe (260) pour la mise à disposition de la liaison directe entre la roue d'entraînement (23) et l'élément de sortie (25) lorsque l'actionneur (24) se trouve dans la première position, et
- plonge dans l'évidement (261), de sorte que l'élément de sortie (25) est mobile par rapport à la roue d'entraînement (23), lorsque l'actionneur (24) se trouve dans la deuxième position et que l'élément de sortie (25) se trouve dans la section prédéfinie (β) du parcours de réglage (α).

10. Mécanisme de commande selon la revendication 8 ou 9, **caractérisé en ce que** l'actionneur (24) maintient dans sa première position l'élément de réglage (26) dans une position d'appui, dans laquelle l'élément de transmission (27) est soutenu au niveau de la surface enveloppe (260).

11. Mécanisme de commande selon la revendication 10, **caractérisé en ce que** l'élément de réglage (26) s'appuie dans la position d'appui contre une butée (200) d'un carter (20) du mécanisme de commande (2) et est maintenu dans la première position de l'actionneur (24) en appui contre la butée (200).

12. Mécanisme de commande selon la revendication 10 ou 11, **caractérisé en ce que** l'élément de réglage (26) est couplé à l'élément d'entraînement (23) par biais d'un ressort mécanique (266), dans lequel le ressort (266) est réalisé pour déplacer l'élément de réglage (26) de la position d'appui à une position de libération, dans laquelle l'élément de transmission (27) peut être introduit dans l'évidement (261), lorsque l'actionneur (24) est conduit de sa première position à la deuxième position et l'élément de sortie (25) se trouve dans la section prédéfinie (β) du parcours de réglage (α).

13. Mécanisme de commande selon la revendication 12, **caractérisé en ce que** le ressort mécanique (266) est réalisé pour provoquer une force de réglage sur l'élément de réglage (26)
- de la position d'appui vers la position de libération, lorsque l'élément de sortie (25) se trouve dans la section prédéfinie (β) du parcours de réglage (α), et
- de la position de libération vers la position d'appui, lorsque l'élément de sortie (25) est déplacé d'une position initiale en dehors de la section prédéfinie (β) du parcours de réglage (α), entraîné par l'élément d'entraînement (23), vers la section prédéfinie (β) du parcours de réglage (α).

14. Mécanisme de commande selon l'une quelconque des revendications précédentes, **caractérisé en ce que** l'actionneur (24) est réalisé,
- pour adopter la première position, lorsqu'une tension électrique (V) mise à disposition par un système d'alimentation en énergie (3) du véhicule est supérieure à une valeur limite prédéfinie, ou
- pour adopter la deuxième position, lorsque la tension électrique (V) du système d'alimentation en énergie (3) est inférieure à la valeur limite prédéfinie.

15. Mécanisme de commande selon l'une quelconque des revendications précédentes, **caractérisé en ce que** l'actionneur (24) comprend un aimant de levage électrique (240) comme élément d'actionnement.
